(19) **Europäisches Patentamt / European Patent Office / Office européen des brevets**

(11) **EP 4 734 524 A1**

(12) **EUROPEAN PATENT APPLICATION**
published in accordance with Art. 153(4) EPC

(43) Date of publication:
29.04.2026 Bulletin 2026/18

(21) Application number: 24832418.8

(22) Date of filing: 26.06.2024

(51) International Patent Classification (IPC):
$H04N\ 19/85^{(2014.01)}$    $H04N\ 19/132^{(2014.01)}$
$H04N\ 19/70^{(2014.01)}$    $H04N\ 19/117^{(2014.01)}$
$G06N\ 3/02^{(2006.01)}$

(52) Cooperative Patent Classification (CPC):
G06N 3/02; H04N 19/117; H04N 19/132;
H04N 19/70; H04N 19/85

(86) International application number:
PCT/KR2024/008860

(87) International publication number:
WO 2025/005640 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.06.2023 US 202363523354 P

(71) Applicant: LG Electronics Inc.
Yeongdeungpo-gu
Seoul 07336 (KR)

(72) Inventors:
• TAN, Hendry
Seoul 06772 (KR)
• NAM, Jung Hak
Seoul 06772 (KR)
• LIM, Jaehyun
Seoul 06772 (KR)
• JANG, Hyeong Moon
Seoul 06772 (KR)
• KIM, Seung Hwan
Seoul 06772 (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **IMAGE ENCODING/DECODING METHOD, METHOD FOR TRANSMITTING BITSTREAM, AND RECORDING MEDIUM ON WHICH BITSTREAM IS STORED**

(57) An image encoding/decoding method, a bitstream transmission method, and a computer-readable recording medium on which a bitstream is stored are provided. The image decoding method, according to the present disclosure, is a method by which an image decoding device decodes an image, and comprises the steps of: acquiring, from a neural-network post-filter characteristics (NNPFC) supplemental enhancement information (SEI) message, first information indicating whether at least one output picture corresponding to at least one input picture is generated; and acquiring, from a neural-network post-filter activation (NNPFA) SEI message, second information indicating whether the generated output picture is output, wherein the value of the second information is determined on the basis of whether the objective of the neural-network post-filter (NNPF) is picture rate upsampling or whether the input picture is plural in number.

FIG. 6

## Description

### TECHNICAL FIELD

The present disclosure relates to an image encoding/decoding method, a method of transmitting a bitstream and a recording medium storing a bitstream, and, more particularly, to a method of determining whether a picture is output.

### BACKGROUND ART

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### DISCLOSURE

### TECHNICAL PROBLEM

An object of the present disclosure is to provide an image encoding/decoding method and apparatus with improved encoding/decoding efficiency.

Another object of the present disclosure is to provide a method of determining whether a picture is output.

Another object of the present disclosure is to solve the problem that an activated NNPFA does not output any picture.

Another object of the present disclosure is to provide a non-transitory computer-readable recording medium storing a bitstream generated by an image encoding method according to the present disclosure.

Another object of the present disclosure is to provide a non-transitory computer-readable recording medium storing a bitstream received, decoded and used to reconstruct an image by an image decoding apparatus according to the present disclosure.

Another object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

### TECHNICAL SOLUTION

An image decoding method according to an aspect of the present disclosure is performed by an image decoding apparatus. The image decoding method may comprise obtaining, from an NNPFC (neural-network post-filter characteristics) SEI (supplemental enhancement information) message, first information specifying whether at least one output picture corresponding to at least one input picture is generated and obtaining, from an NNPFA (neural-network post-filter activation) SEI message, second information specifying whether the generated output picture is output. A value of the second information may be determined based on at least one of whether a purpose of an NNPF (neural-network post-filter) is picture rate upsampling or whether a number of input pictures is multiple.

An image encoding method according to another aspect of the present disclosure is performed by an image encoding apparatus. The image encoding method may comprise encoding, from an NNPFC (neural-network post-filter characteristics) SEI (supplemental enhancement information) message, first information specifying whether at least one output picture corresponding to at least one input picture is generated and encoding, from an NNPFA (neural-network post-filter activation) SEI message, second information specifying whether the generated output picture is output. A value of the second information may be determined based on at least one of whether a purpose of an NNPF (neural-network post-filter) is picture rate upsampling or whether a number of input pictures is multiple.

A computer-readable recording medium according to another aspect of the present disclosure can store a bitstream generated by the image encoding method or apparatus of the present disclosure.

A transmission method according to another aspect of the present disclosure may transmit a bitstream generated by the image encoding method or apparatus of the present disclosure.

The features briefly summarized above with respect to the present disclosure are merely exemplary aspects of the detailed description below of the present disclosure, and do not limit the scope of the present disclosure.

## ADVANTAGEOUS EFFECTS

According to the present disclosure, it is possible to provide an image encoding/decoding method and apparatus with improved encoding/decoding efficiency.

Also, according to the present disclosure, it is possible to provide determine whether a picture is output under a predetermined condition.

Also, according to the present disclosure, it is possible to solve the problem that an activated NNPFA does not output any picture.

Also, according to the present disclosure, it is possible to provide a non-transitory computer-readable recording medium storing a bitstream generated by an image encoding method according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method according to the present disclosure.

It will be appreciated by persons skilled in the art that that the effects that can be achieved through the present disclosure are not limited to what has been particularly described hereinabove and other advantages of the present disclosure will be more clearly understood from the detailed description.

## BRIEF DESCRIPTION OF THE DRAWINGS

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a view showing an interleaved method for derivation of a luma channel.

FIG. 5 is a flowchart illustrating an image encoding method according to an embodiment of the present disclosure.

FIG. 6 is a flowchart illustrating an image decoding method according to an embodiment of the present disclosure.

FIG. 7 is a flowchart illustrating an image encoding/decoding method according to another embodiment of the present disclosure.

FIG. 8 is a flowchart illustrating an image encoding/decoding method according to another embodiment of the present disclosure.

FIG. 9 is a flowchart illustrating an image encoding/decoding method according to another embodiment of the present disclosure.

FIG. 10 is a flowchart illustrating an image encoding/decoding method according to another embodiment of the present disclosure.

FIG. 11 is a flowchart illustrating an image encoding/decoding method according to another embodiment of the present disclosure.

FIG. 12 is a flowchart illustrating an image encoding/decoding method according to another embodiment of the present disclosure.

FIG. 13 is a view showing a content streaming system to which an embodiment of the present disclosure is applicable.

## MODE FOR INVENTION

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block". In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

Overview of video coding system

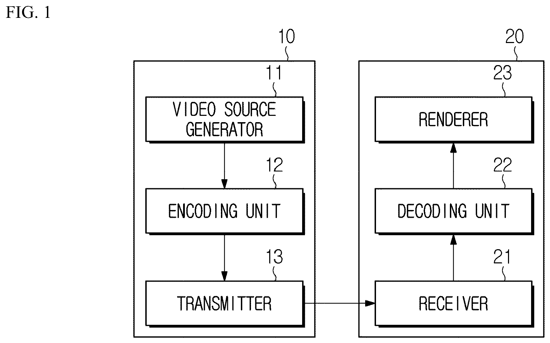

FIG. 1 is a view showing a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit(encoder) 12 and a transmitter 13. The decoding apparatus 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

<u>Overview of image encoding apparatus</u>

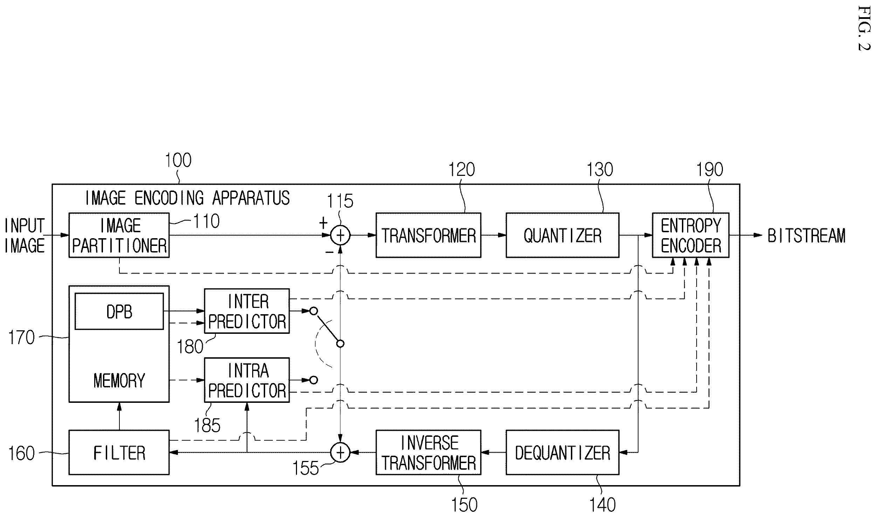

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

Overview of image decoding apparatus

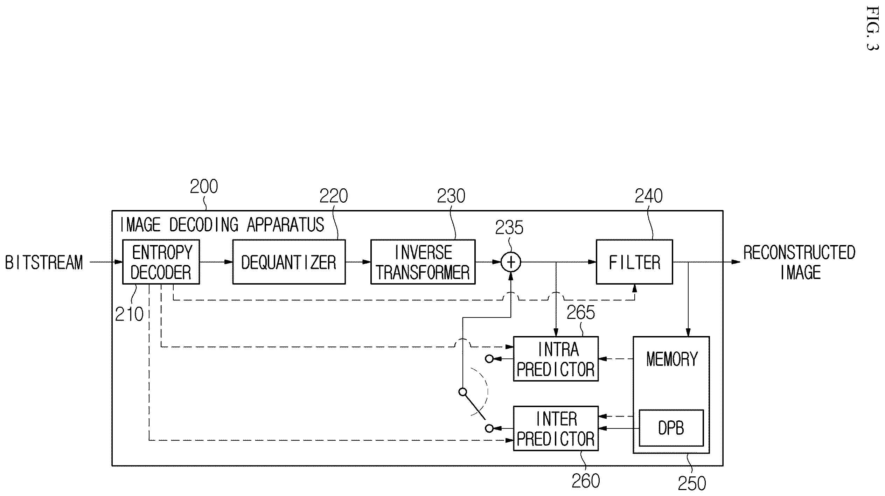

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra prediction unit 265. The inter predictor(inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra prediction unit 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

Neural-network post-filter characteristics (NNPFC)

A combinations of Tables 1 to 3 represent an NNPFC syntax structure.

[Table 1]

| nn_post_filter_characteristics( payloadSize ) { | Descriptor |
|---|---|
|   nnpfc_purpose | u(16) |
|   nnpfc_id | ue(v) |
|   nnpfc_base_flag | u(1) |
|   nnpfc_mode_idc | ue(v) |
|   if( nnpfc_mode_idc = = 1 ) { | |
|     while( !byte_aligned( ) ) | |
|       nnpfc_reserved_zero_bit_a | u(1) |
|     nnpfc_tag_uri | st(v) |
|     nnpfc_uri | st(v) |
|   } | |
|   nnpfc_property_present_flag | u(1) |
|   if( nnpfc_property_present_flag ) { | |
|     /* input and output formatting */ | |
|     nnpfc_num_input_pics_minus1 | ue(v) |
|     if( nnpfc_num_input_pics_minus1 > 0 ) { | |
|       for( i = 0; i <= nnpfc _num_input_pics_minus1; i++ ) | |

(continued)

| | |
|---|---|
| **nnpfc_input_pic_output_flag**[ i ] | u(1) |
| **nnpfc_absent_input_pic_zero_flag** | u(1) |
| } | |
| if( chromaUpsamplingFlag ) | |
| **nnpfc_out_sub_c_flag** | u(1) |
| if( colourizationFlag ) | |
| **nnpfc_out_colour_format_idc** | u(2) |
| if( resolutionResamplingFlag ) { | |
| **unpfc_pic_width_num_minus1** | ue(v) |
| **nnpfc_pic_width_denom_minus1** | ue(v) |
| **unpfc_pic_height_num_minus1** | ue(v) |
| **nnpfc_pic_height_denom_minus1** | ue(v) |
| } | |
| if( pictureRateUpsamplingFlag ) | |
| for( i = 0; i < nnpfc_num_input_pics_minus1; i++ ) | |
| **nnpfc_interpolated_pics**[ i ] | ue(v) |
| **nnpfc_component_last_flag** | u(1) |
| **nnpfc_inp_format_idc** | ue(v) |
| **nnpfc_auxiliary_inp_idc** | ue(v) |

[Table 2]

| | |
|---|---|
| **nnpfe_inp_order_idc** | ue(v) |
| if( nnpfc_inp_format_idc == 1 ) { | |
| if( nnpfc_inp_order_idc != 1 ) | |
| **nnpfc_inp_tensor_luma_bitdepth_minus8** | ue(v) |
| if( nnpfc_inp_order_idc != 0 ) | |
| **nnpfc_inp_tensor_chroma_bitdepth_minus8** | ue(v) |
| } | |
| **nnpfc_out_format_idc** | ue(v) |
| **nnpfc_out_order_idc** | ue(v) |
| if( nnpfc_out_format_ide = = 1 ) { | |
| if( nnpfc_out_order_idc != 1 ) | |
| **nnpfc_out_tensor_luma_bitdepth_minus8** | ue(v) |
| if( nnpfc_out_order_idc != 0 ) | |
| **nnpfc_out_tensor_chroma_bitdepth_minus8** | ue(v) |
| } | |
| **nnpfc_separate_colour_description_present_flag** | u(1) |
| if( nnpfc_separate_colour_description_present_flag ) { | |
| **nnpfc_colour_primaries** | u(8) |
| **nnpfc_transfer_characteristics** | u(8) |

(continued)

| | |
|---|---|
| if( nnpfc_out_format_idc = = 1 ) { | |
| **nnpfc_matrix_coeffs** | u(8) |
| **nnpfc_full_range_flag** | u(1) |
| } | |
| } | |
| **nnpfc_chroma_loc_info_present_flag** | u(1) |
| if( nnpfc_chroma_loc_info_present_flag) | |
| **nnpfc_chroma_sample_loc_type_frame** | ue(v) |
| **nnpfc_overlap** | ue(v) |
| **nnpfc_constant_patch_size flag** | u(1) |
| if( nnpfc_constant_patch_size_flag ) { | |
| **nnpfc_patch_width_minus1** | ue(v) |
| **nnpfc_patch_height_minus1** | ue(v) |
| } else { | |
| **nnpfc_extended_patch_width_cd_delta_minus1** | ue(v) |
| **nnpfc_extended_patch_height_cd_delta_minus1** | ue(v) |
| } | |

[Table 3]

| | |
|---|---|
| **nnpfc_padding_type** | ue(v) |
| if( nnpfc_padding_type = = 4 ) { | |
| if( nnpfc_inp_order_idc != 1 ) | |
| **nnpfc_luma_padding_val** | ue(v) |
| if( nnpfc_inp_order_idc != 0 ) { | |
| **nnpfc_cb_padding_val** | ue(v) |
| **nnpfc_cr_padding_val** | ue(v) |
| } | |
| } | |
| **nnpfc_complexity_info_present_flag** | u(1) |
| if( nnpfc_complexity_info_present_flag ) { | |
| **nnpfc_parameter_type_ide** | u(2) |
| if( nnpfc_parameter_type_ide != 2 ) | |
| **nnpfc_log2_parameter_bit_length_minus3** | u(2) |
| **nnpfc_num_parameters_idc** | u(6) |
| **nnpfc_num_kmac_operations_ide** | ue(v) |
| **nnpfc_total_kilobyte_size** | ue(v) |
| } | |
| **nnpfc_metadata_extension_num_bits** | ue(v) |
| if( nnpfc_metadata_extension_num_bits > 0 ) | |
| **nnpfc_reserved_metadata_extension** | u(v) |

(continued)

| | |
|---|---|
| } | |
| /* ISO/IEC 15938-17 bitstream */ | |
| if( nnpfc_mode_idc = = 0 ) { | |
|   while( !byte_aligned( ) ) | |
|     **nnpfc_reserved_zero_bit_b** | u(1) |
|   for( i = 0; more_data_in_payload( ); i++ ) | |
|     **nnpfc_payload_byte**[ i ] | b(8) |
|   } | |
| } | |

The NNPFC syntax structures of Tables 1 to 3 may be signaled in the form of a supplemental enhancement information (SEI) message. An SEI message signaling the NNPFC syntax structures of Tables 1 to 3 may be referred to as an NNPFC SEI message.

The neural-network post-filter characteristics (NNPFC) SEI message specifies a neural network that may be used as a post-processing filter. The use of specified neural-network post-processing filters (NNPFs) for specific pictures is indicated with neural-network post-filter activation (NNPFA) SEI messages. Here, "post-processing filter" and "post filter" may have the same meaning.

Use of this SEI message requires the definition of the following variables:

- Input picture width and height in units of luma samples, denoted herein by CroppedWidth and CroppedHeight, respectively.
- Luma sample array CroppedYPic[ idx ] and chroma sample arrays CroppedCbPic[ idx ] and CroppedCrPic[ idx ], when present, of the input pictures with index idx in the range of 0 to numInputPics - 1, inclusive, that are used as input for the NNPF.
- $BitDepth_Y$ may represent a bit depth for the luma sample array of the input pictures.
- BitDepthc may represent a bit depth for the chroma sample arrays, if any, of the input pictures.
- ChromaFormatIdc may represent a chroma format identifier.

- When nnpfc_auxiliary_inp_idc is equal to 1, a filtering strength control value array StrengthControlVal[ idx ] that shall contain real numbers in the range of 0 to 1, inclusive, of the input pictures with index idx in the range of 0 to numInputPics - 1, inclusive.

Input picture with index 0 may correspond to the picture for which the NNPF defined by this NNPFC SEI message is activated by an NNPFA SEI message. Input picture with index i in the range of 1 to numInputPics - 1, inclusive, may precede the input picture with index i - 1 in output order.

nnpfc_purpose indicates the purpose of the NNPF as specified in Table 4. In Table 4, ( nnpfc_purpose & bitMask ) not equal to 0 may indicates that the NNPF of Table 4 has the purpose associated with the bitMask value. When nnpfc_purpose is greater than 0 and ( nnpfc_purpose & bitMask ) is equal to 0, the purpose associated with the bitMask value is not applicable to the NNPF. When nnpfc_pupose is equal to 0, the NNPF may be used as determined by the application. The value of nnpfc_purpose shall be in the range of 0 to 63, inclusive, in bitstreams. Values of 64 to 65 535, inclusive, for nnpfc_purpose are reserved for future use. Decoders shall ignore NNPFC SEI messages with nnpfc_purpose in the range of 64 to 65 535, inclusive.

[Table 4]

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |

(continued)

| bitMask | Interpretation |
|---------|----------------|
| 0x10 | Bit depth upsampling (increasing the luma bit depth or the chroma bit depth) |
| 0x20 | Colourization |

A variable chromaUpsamplingFlag specifying whether nnpfc_purpose indicates the purpose of the NNPF to include chroma upsampling, a variable resolutionResamplingFlag specifying whether nnpfc_purpose indicates the purpose of the NNPF to include resolution resampling, a variable pictureRateUpsamplingFlag specifying whether nnpfc_purpose indicates the purpose of the NNPF to include picture rate upsampling, a variable bitDepthUpsamplingFlag indicating the purpose of the NNPF to include bit depth upsampling, and a variable colourizationFlag specifying the purpose of the NNPF to include colourization, are derived as shown in Table 5 below.

[Table 5]

chromaUpsamplingFlag = ( ( nnpfc_purpose & 0x02 ) > 0 ) ? 1 : 0
resolutionResainplingFlag = ( ( nnpfc_purpose & 0x04 ) > 0 ) ? 1 : 0
pictureRateUpsamplingFlag = ( ( nnpfcpurpose & 0x08 ) > 0 ) ? 1 : 0
bitDepthUpsamplingFlag = ( ( nnpfc_purpose & 0x10 ) > 0 ) ? 1 : 0
colourizationFlag = ( ( nnpfc_purpose & 0x20 ) > 0 ) ? 1 : 0

When ChromaFormatIdc is equal to 3, chromaUpsamplingFlag shall be equal to 0. When ChromaFormatIdc or chromaUpsamplingFlag is not equal to 0, colourizationFlag shall be equal to 0. When pictureRateUpsamplingFlag is equal to 1 and the input picture with index 0 is associated with a frame packing arrangement SEI message with fp_arrangement_type equal to 5, all input pictures may be associated with a frame packing arrangement SEI message with fp_arrangement_type equal to 5 and the same value of fp_current_frame_is_frame0_flag.

nnpfc_id may contain an identifying number that may be used to identify an NNPF. The value of nnpfc_id shall be in the range of 0 to $2^{32}$ - 2, inclusive. Values of nnpfc_id from 256 to 511, inclusive, and from $2^{31}$ to $2^{32}$ - 2, inclusive, may be reserved for future use. Decoders encountering an NNPFC SEI message with nnpfc_id in the range of 256 to 511, inclusive, or in the range of $2^{31}$ to $2^{32}$ - 2, inclusive, shall ignore the SEI message.

When an NNPFC SEI message is the first NNPFC SEI message, in decoding order, that has a particular nnpfc_id value within the current CLVS, the following applies:

- This SEI message specifies a base NNPF.
- This SEI message pertains to the current decoded picture and all subsequent decoded pictures of the current layer, in output order, until the end of the current CLVS.

The NNPFC SEI message may be a repetition of a previous NNPFC SEI message within the current CLVS in decoding order, and subsequent semantics may apply as if this SEI message were the only NNPFC SEI message with identical content within the current CLVS.

nnpfc_mode_idc equal to 0 may indicate that the SEI message may contain a bitstream representing the base NNPF, or may represent an update relative to the base NNPF with the same nnpfc_id value.

When the NNPFC SEI message is the first NNPFC SEI message, in decoding order, that has a particular nnpfc_id value within the current CLVS, nnpfc_mode_idc equal to 1 may specify that the base NNPF associated with the nnpfc_id value is a neural network, and the neural network may be a neural network identified by a URI denoted by nnpfc_uri using a format identified by a tag URI nnpfc_tag_uri.

If the NNPFC SEI message is neither the first NNPFC SEI message, in decoding order, that has a particular nnpfc_id value within the current CLVS nor a repetition of the first NNPFC SEI message, nnpfc_mode_idc equal to 1 may specify that an update relative to the base NNPF with the same nnpfc_id value are defined by a URI denoted by nnpfc_uri using a format identified by a tag URI nnpfc_tag_uri.

nnpfc_base_flag equal to 1 may specify that the SEI message specifies the base NNPF. nnpf_base_flag equal to 0 may specify that the SEI message specifies an update relative to the base NNPF.

The following constraints apply to the value of nnpfc_base_flag:

- When an NNPFC SEI message is the first NNPFC SEI message, in decoding order, that has a particular nnpfc_id value within the current CLVS, the value of nnpfc_base_flag shall be equal to 1.

When an NNPFC SEI message nnpfcB is not the first NNPFC SEI message, in decoding order, that has a particular nnpfc_id value within the current CLVS and the value of nnpfc_base_flag is equal to 1, the NNPFC SEI message shall be a repetition of the first NNPFC SEI message nnpfcA with the same nnpfc_id value, in decoding order, i.e., the payload content of nnpfcB shall be the same as that of nnpfcA.

When nnpfc_base_flag is equal to 0, the following applies:

- This SEI message defines an update relative to the preceding base NNPF in decoding order with the same nnpfc_id value. Updates are not cumulative but rather each update is applied on the base NNPF, which is the NNPF specified by the first NNPFC SEI message, in decoding order, that has a particular nnpfc_id value within the current CLVS. The NNPF defined by this SEI message may be obtained by applying the update defined by this SEI message relative to the base NNPF with the same nnpfc_id value.

- This SEI message pertains to the current decoded picture and all subsequent decoded pictures of the current layer, in output order, until the end of the current CLVS. Herein, the decoded picture that follows the current decoded picture in output order within the current CLVS may be excluded. This SEI message is associated with a subsequent NNPFC SEI message, in decoding order, having nnpfc_base_flag equal to 0 and that particular nnpfc_id value within the current CLVS, whichever is earlier.

nnpfc_mode_idc equal to 0 may indicate that this SEI message contains a bitstream that specifies a base NNPF (when nnpfc_base_flag is equal to 1) or is an update relative to the base NNPF with the same nnpfc_id value (when nnpfc_base_flag is equal to 0). When nnpfc_base_flag is equal to 1, nnpfc_mode_idc equal to 1 may specify that the base NNPF associated with the nnpfc_id value is a neural network identified by the URI. Herein, the URI may be indicated by nnpfc_uri with the format identified by the tag URI nnpfc_tag_uri. When nnpfc_base_flag is equal to 0, nnpfc_mode_idc equal to 1 may specify that an update relative to the base NNPF with the same nnpfc_id value is defined by the URI. Herein, the URI may be indicated by nnpfc_uri with the format identified by the tag URI nnpfc_tag_uri.

The value of nnpfc_mode_idc shall be in the range of 0 to 1, inclusive, in bitstreams. Values of 2 to 255, inclusive, for nnpfc_mode_idc may reserved for future use and shall not be present in bitstreams. Decoders shall ignore NNPFC SEI messages with nnpfc_mode_idc in the range of 2 to 255, inclusive. Values of nnpfc_mode_idc greater than 255 shall not be present in bitstreams and may not be reserved for future use.

nnpfc_reserved_zero_bit_a shall be equal to 0 in bitstreams. Decoders shall ignore NNPFC SEI messages in which nnpfc_reserved_zero_bit_a is not equal to 0.

nnpfc_tag_uri may contain a tag URI with syntax and semantics as specified in IETF RFC 4151 identifying the neural network used as a base NNPF or an update relative to the base NNPF with the same nnpfc_id value specified by nnpfc_uri. nnpfc_tag_uri enables uniquely identifying the format of neural network data specified by nnrpf_uri without needing a central registration authority. nnpfc_tag_uri equal to "tag:iso.org,2023:15938-17" may indicate that the neural network data identified by nnpfc_uri conforms to ISO/IEC 15938-17.

nnpfc_uri may contain a URI with syntax and semantics as specified in IETF Internet Standard 66 identifying the neural network used as a base NNPF or an update relative to the base NNPF with the same nnpfc_id value.

nnpfc_property_present_flag equal to 1 may specify that syntax elements related to the filter purpose, input formatting, output formatting, and complexity are present. nnpfc_property_present_flag equal to 0 may specify that no syntax elements related to the filter purpose, input formatting, output formatting, and complexity are present. When nnpfc_base_flag is equal to 1, nnpfc_property_present_flag shall be equal to 1. When nnpfc_property_present _flag is equal to 0, the values of all syntax elements that may be present only when nnpfc_property_present_flag is equal to 1 may be inferred to be equal to their corresponding syntax elements, respectively, in the NNPFC SEI message that contains the base NNPF for which this SEI message provides an update.

When an NNPFC SEI message nnpfcCurr is not the first NNPFC SEI message, in decoding order, that has a particular nnpfc_id value within the current CLVS, is not a repetition of the first NNPFC SEI message with that particular nnpfc_id (i.e., the value of nnpfc_base_flag is equal to 0), and the value of nnpfc_property_present _flag is equal to 1, the following constraints apply:

- The value of nnpfc_purpose in the NNPFC SEI message shall be the same as the value of nnpfc_purpose in the first NNPFC SEI message, in decoding order, that has that particular nnpfc_id value within the current CLVS.
- The values of syntax elements following nnpfc_property_present_flag and preceding nnpfc_complexity_info_present_flag, in decoding order, in the NNPFC SEI message shall be the same as the values of corresponding syntax elements in the first NNPFC SEI message, in decoding order, that has that particular nnpfc_id value within the current CLVS.
- Either nnpfc_complexity_info_present_flag shall be equal to 0 or both nnpfc_complexity_info_present_flag shall be equal to 1 in the first NNPFC SEI message, in decoding order, that has that particular nnpfc_id value within the current CLVS and all the following apply:

(1) nnpfc_parameter_type_idc in nnpfcCurr shall be equal to nnpfc_parameter_type_ide in nnpfcBase.

(2) nnpfc_log2_parameter_bit_length_minus3 in nnpfcCurr, when present, shall be less than or equal to nnpfc_log2_parameter_bit_length_minus3 in nnpfcBase.

(3) If nnpfc_num_parameters_idc in nnpfcBase is equal to 0, nnpfc_num_parameters_ide in nnpfcCurr shall be equal to 0.

(4) Otherwise (nnpfc_num_parameters_idc in nnpfcBase is greater than 0), nnpfc_num_parameters_idc in nnpfcCurr shall be greater than 0 and less than or equal to nnpfc_num_parameters_idc in nnpfcBase.

(5) If nnpfc_num_kmac_operations_idc in nnpfcBase is equal to 0, nnpfcnum_kmac_operations_idc in nnpfcCurr shall be equal to 0.

(6) Otherwise (nnpfc_num_kmac_operations_idc in nnpfcBase is greater than 0), nnpfc_num_kmac_operations_idc in nnpfcCurr shall be greater than 0 and less than or equal to nnpfc_num_kmac_operations_idc in nnpfcBase.

(7) If nnpfc_total_kilobyte_size in nnpfcBase is equal to 0, nnpfc_total_kilobyte_size in nnpfcCurr shall be equal to 0.

(8) Otherwise (nnpfc_total_kilobyte_size in nnpfcBase is greater than 0), nnpfc_total_kilobyte_size in nnpfcCurr shall be greater than 0 and less than or equal to nnpfc_total_kilobyte_size in nnpfcBase.

nnpfc_num_input_pics_minus1 + 1 may specify the number of pictures used as input for the NNPF. The value of nnpfc_num_input_pics_minus1 shall be in the range of 0 to 63, inclusive. When pictureRateUpsamplingFlag is equal to 1, the value of nnpfc_num_input_pics_minus1 shall be greater than 0.

The variable numInputPics, specifying the number of pictures used as input for the NNPF, may be derived as follows:

[Equation 1]

$$ numInputPics = nnpfc\_num\_input\_pics\_minus1 + 1 $$

nnpfc_input_pic_output_flag[ i ] equal to 1 may indicate that for the i-th input picture the NNPF generates a corresponding output picture. nnpfcinput_pic_output_flag[ i ] equal to 0 may indicate that for the i-th input picture the NNPF does not generate a corresponding output picture. When nnpfc_num_input_pics_minus1 is equal to 0, nnpfc_input_pic_output_flag[ 0 ] is inferred to be equal to 1. When pictureRateUpsamplingFlag is equal to 0 and nnpfcnum_input_pics_minus1 is greater than 0, nnpfc_input_pic_output_flag[ i ] shall be equal to 1 for at least one value of i in the range of 0 to nnpfc_num_input_pics_minus1, inclusive. nnpfc_input_pic_output_flag[ i ] may be referred to as nnpfc_input_pic_filtering_flag[ i ].

nnpfc_absent_input_pic_zero_flag equal to 1 may indicate that the NNPF expects an input picture that is not present in the bitstream to be represented by sample arrays with sample values equal to 0. nnpfc_absent_input_pic_flag equal to 0 may indicate that the NNPF expects an input picture that is not present in the bitstream to be represented by the closest input picture in output order within the bitstream.

nnpfc_out_sub_c_flag may specify the values of the variables outSubWidthC and outSubHeightC when chromaUpsamplingFlag is equal to 1. nnpfc_out_sub_c_flag equal to 1 may specify that outSubWidthC is equal to 1 and outSubHeightC is equal to 1. nnpfc_out_sub_c_flag equal to 0 may specify that outSubWidthC is equal to 2 and outSubHeightC is equal to 1. When ChromaFormatIdc is equal to 2 and nnpfc_out_sub_c_flag is present, the value of nnpfc_out_sub_c_flag shall be equal to 1.

nnpfc_out_colour_format_idc, when colourizationFlag is equal to 1, may specify the colour format of the NNPF output and consequently the values of the variables outSubWidthC and outSubHeightC. nnpfc_out_colour_format_idc equal to 1 may specify that the colour format of the NNPF output is the 4:2:0 format and outSubWidthC and outSubHeightC are both equal to 2. nnpfc_out_colour_format_idc equal to 2 may specify that the colour format of the NNPF output is the 4:2:2 format and outSubWidthC is equal to 2 and outSubHeightC is equal to 1. nnpfc_out_colour_format_idc equal to 3 may specify that the colour format of the NNPF output is the 4:4:4 format and outSubWidthC and outSubHeightC are both equal to 1. The value of nnpfc_out_colour_format_idc shall not be equal to 0. When chromaUpsamplingFlag and colourizationFlag are both equal to 0, outSubWidthC and outSubHeightC may be inferred to be equal to SubWidthC and SubHeightC, respectively.

nnpfc_pic_width_num_minus1 + 1 and nnpfc_pic_width_denom_minus1 + 1 may specify the numerator and denominator, respectively, for the resampling ratio of the NNPF output picture width relative to CroppedWidth. The value of ( nnpfc_pic_width_num_minus1 + 1 ) ÷ ( nnpfc_pic_width_denom_minus1 + 1 ) shall be in the range of 1 ÷ 16 to 16, inclusive. When nnpfc_pic_width_num_minus1 and nnpfc_pic_width_denom_minus1 are not present, the values of nnpfc_pic_width_num_minus1 and nnpfc_pic_width_denom_minus 1 may be both inferred to be equal to 0.

The variable nnpfcOutputPicWidth, representing the width of the luma sample arrays of the picture(s) resulting from applying the NNPF identified by nnpfc_id to the input picture(s), may be derived as follows:

[Equation 2]

$$nnpfcOutputPicWidth = Ceil(\ CroppedWidth\ *$$
$$(\ nnpfc\_pic\_width\_num\_minus1 + 1\ ) \div (\ nnpfc\_pic\_width\_denom\_minus1 + 1\ )\ )$$

The remainder of nnpfcOutputPicWidth divided by outSubWidthC shall be 0.

nnpfc_pic_height_num_minus1 + 1 and nnpfc_pic_height_denom_minus1 + 1 may specify the numerator and denominator, respectively, for the resampling ratio of the NNPF output picture height relative to CroppedHeight. The value of ( nnpfc_pic_height_num_minus1 + 1 ) ÷ ( nnpfc_pic_height_denom_minus1 + 1 ) shall be in the range of 1 ÷ 16 to 16, inclusive. When nnpfc_pic_height_num_num_minus1 and nnpfc_pic_height_denom_minus1 are not present, the values of nnpfc_pic_height_num_minus1 and nnpfc_pic_height_denom_minus1 may be both inferred to be equal to 0.

The variable nnpfcOutputPicHeight, representing the height of the luma sample arrays of the picture(s) resulting from applying the NNPF identified by nnpfc_id to the input picture(s), may be derived as follows:

[Equation 3]

$$nnpfcOutputPicHeight = Ceil(\ CroppedHeight\ *$$
$$(\ nnpfc\_pic\_height\_num\_minus1 + 1\ ) \div (\ nnpfc\_pic\_height\_denom\_minus1 + 1\ )\ )$$

The remainder of nnpfcOutputPicHeight divided by outSubHeightC shall be equal to 0.

When nnpfc_pic_width_num_minus1, nnpfc_pic_width_denom_minus1, nnpfc_pic_height_num_minus1, and nnpfc_pic_height_denom_minus1 are present, at least one of the following shall be true:

The value of nnpfcOutputPicWidth is not equal to CroppedWidth.

The value of nnpfcOutputPicHeight is not equal to CroppedHeight.

nnpfc_interpolated_pics[ i ] may specify the number of interpolated pictures generated by the NNPF between the i-th and the ( i + 1 )-th picture used as input for the NNPF. The value of nnpfc_interpolated_pics[ i ] shall be in the range of 0 to 63, inclusive. The value of nnpfc_interpolated_pics[ i ] shall be greater than 0 for at least one value of i in the range of 0 to nnpfc_num_input_pics_minus1 - 1, inclusive.

The variables NumInpPicsInOutputTensor, specifying the number of pictures that have a corresponding input picture and are present in the output tensor of the NNPF, InpIdx[ idx ] specifying the input picture index of the idx-th picture that is present in the output tensor of the NNPF and has a corresponding input picture, and numOutputPics, specifying the total number of pictures present in the output tensor of the NNPF, may be derived as shown in Table 6

[Table 6]

```
for( i = 0, numOutputPics = 0; i < numInputPics; i++ )
    if( nnpfc_input_pic_output_flag[ i ] ) {
        InpIdx[ numOutputPics ] = i
        numOutputPics++
    }
NumInpPicsInOutputTensor = numOutputPics
if( pictureRateUpsamplingFlag )
    for( i = 0; i <= numInputPics - 2; i++ )
        numOutputPics += nnpfc_interpolated_pics[ i ]
```

nnpfc_component_last_flag equal to 1 may indicate that the last dimension in the input tensor inputTensor to the NNPF and the output tensor outputTensor resulting from the NNPF is used for a current channel. nnpfc_component_last_flag equal to 0 may indicate that the third dimension in the input tensor inputTensor to the NNPF and the output tensor outputTensor resulting from the NNPF is used for a current channel. The first dimension in the input tensor and in the output tensor may be used for the batch index, which is a practice in some neural network frameworks. While formulae in the semantics of this SEI message use the batch size corresponding to the batch index equal to 0, it is up to the post-processing implementation to determine the batch size used as input to the neural network inference. For example, when nnpfc_inp_order_idc is equal to 3 and nnpfc_auxiliary_inp_idc is equal to 1, there are 7 channels in the input tensor, including four luma matrices, two chroma matrices, and one auxiliary input matrix. In this case, the process DeriveInputTensors( ) would derive each of these 7 channels of the input tensor one by one, and when a particular channel of these channels is processed, that channel may be referred to as the current channel during the process.

nnpfc_inp_format_idc may indicate the method of converting a sample value of the input picture to an input value to the NNPF. When nnpfc_inp_format_idc is equal to 0, the input values to the NNPF are real numbers and the functions InpY( ) and InpC( ) may be specified as shown in Equation 4.

[Equation 4]

$$\mathrm{InpY}(\,x\,) = x \div (\,(\,1\,\ll\,\mathrm{BitDepth_Y}\,) - 1\,)$$

$$\mathrm{InpC}(\,x\,) = x \div (\,(\,1\,\ll\,\mathrm{BitDepth_C}\,) - 1\,)$$

When nnpfc_inp_format_idc is equal to 1, the input values to the NNPF are unsigned integer numbers and the functions InpY( ) and InpC( ) are specified as shown in Table 7.

[Table 7]

```
shiftY = BitDepth_Y - inpTensorBitDepth_Y
if( inpTensorBitDepth_Y >= BitDepth_Y)
    InpY( x ) = x << ( inpTensorBitDepth_Y - BitDepth_Y )
else
    InpY( x ) = Clip3(0, ( 1 << inpTensorBitDepth_Y ) - 1, ( x + ( 1 << ( shiftY - 1 ) ) ) >> shiftY )
shiftC = BitDepth_C - inpTensorBitDepth_C
if( inpTensorBitDepth_C >= BitDepth_C )
    InpC( x ) = x << ( inpTensorBitDepth_C - BitDepth_C )
else
    InpC( x ) = Clip3(0, ( 1 << inpTensorBitDepth_C ) - 1, ( x + ( 1 << ( shiftC - 1 ) ) ) >> shiftC )
```

The variable $inpTensorBitDepth_Y$ may be derived from the syntax element nnpfc_inp_tensor_luma_bitdepth_minus8 as specified below. The variable inpTensorBitDepthc may be derived from the syntax element nnpfc_inp_tensor_chroma_bitdepth_minus8 as specified below. Values of nnpfc_inp_format_idc greater than 1 may be reserved for future use and shall not be present in bitstreams. Decoders shall ignore NNPFC SEI messages that contain reserved values of nnpfc_inp_format_idc.

nnpfc_auxiliary_inp_ide greater than 0 may indicate that auxiliary input data is present in the input tensor of the NNPF. nnpfc_auxiliary_inp_idc equal to 0 may indicate that auxiliary input data is not present in the input tensor. nnpfc_auxiliary_inp_ide equal to 1 may specify that auxiliary input data is derived through the method shown in Table 10 to Table 12. The value of nnpfc_auxiliary_inp_ide shall be in the range of 0 to 1, inclusive, in bitstreams. Values of 2 to 255, inclusive, for nnpfc_auxiliary_inp_idc may be reserved for future use and shall not be present in bitstreams. Decoders shall ignore NNPFC SEI messages with nnpfc_auxiliary_inp_idc in the range of 2 to 255, inclusive. Values of nnpfc_auxiliary_inp_idc greater than 255 shall not be present in bitstreams and are not reserved for future use.

nnpfc_inp_order_idc may indicate the method of ordering the sample arrays of an input picture to form an input tensor to the NNPF. The value of nnpfc_inp_order_idc shall be in the range of 0 to 3, inclusive, in bitstreams. Values of 4 to 255, inclusive, for nnpfc_inp_order_idc may be reserved for future use and shall not be present in bitstreams. Decoders shall ignore NNPFC SEI messages with nnpfc_inp_order_idc in the range of 4 to 255, inclusive. Values of nnpfc_inp_order_idc greater than 255 shall not be present in bitstreams and are not reserved for future use. When ChromaFormatIdc is not equal to 1, nnpfc_inp_order_idc shall not be equal to 3. When ChromaFormatIdc is equal to 0, nnpfc_inp_order_idc shall be equal to 0. When chromaUpsamplingFlag is equal to 1, nnpfc_inp_order_idc shall not be equal to 0.

Table 8 shows an informative description of nnpfc_inp_order_idc values.

[Table 8]

| nnpfc_inp_order_idc | Description |
|---|---|
| 0 | When nnpfc_inp_order_idc is equal to 0, one luma matrix may be present in the input tensor to each input picture and the number of channels may be 1. When |
|  | nnpfc_inp_order_idc is equal to 1, one luma matrix and one auxiliary input matrix may be present and the number of channels may be 2. |
| 1 | When nnpfc_inp_order_idc is equal to 0, two chroma matrices may be present in the input tensor and the number of channels may be 2. When nnpfc_inp_order_idc is equal to 1, two chroma matrices and one auxiliary input matrix may be present and the number of channels may be 3. |
| 2 | When nnpfc_inp_order_idc is equal to 0, one luma matrix and two chroma matrices may be present in the input tensor and the number of channels may be 3. When nnpfc_inp_order_idc is equal to 1, one luma matrix, two chroma matrices and one auxiliary input matrix may be present and the number of channels may be 4. |
| 3 | When nnpfc_inp_order_idc is equal to 0, four luma matrices and two chroma matrices may be present in the input tensor and the number of channels may be 6. When nnpfc_inp_order_idc is equal to 1, four luma matrices, two chroma matrices and one auxiliary input matrix may be present and the number of channels may be 7. The luma channel may be derived using an interleaved method as shown in FIG. 4. nnpfc_inp_order_idc may be used only when an input chroma format is 4:2:0. |
| 4 ... 255 | reserved |

nnpfc_inp_tensor_luma_bitdepth_minus8 + 8 may specify the bit depth of luma sample values in the input integer tensor. The value of inpTensorBitDepth$_Y$ is derived as shown in Equation 5.

[Equation 5]

$$\text{inpTensorBitDepth}_Y = \text{nnpfc\_inp\_tensor\_luma\_bitdepth\_minus8} + 8$$

It is a requirement of bitstream conformance that the value of nnpfc_inp_tensor_luma_bitdepth_minus8 shall be in the range of 0 to 24, inclusive.

nnpfc_inp_tensor_chroma_bitdepth_minus8 + 8 may specify the bit depth of chroma sample values in the input integer tensor. The value of inpTensorBitDepthc may be derived as shown in Equation 6.

[Equation 6]

$$\text{inpTensorBitDepth}_C = \text{nnpfc\_inp\_tensor\_chroma\_bitdepth\_minus8} + 8$$

It is a requirement of bitstream conformance that the value of nnpfc_inp_tensor_chroma_bitdepth__minus8 shall be in the range of 0 to 24, inclusive.

When nnpfc_auxiliary_inp_ide is equal to 1, the variable strengthControlScaledVal may be derived as shown in Table 9.

[Table 9]

```
for( i = 0; i < numInputPics; i++ )
    if( nnpfc_inp_formatidc == 1 )
        if( nnpfc_inp_order_idc == 0 || nnpfc_inp_order_idc == 2 ||
            nnpfc inp order idc == 3 )
            strengthControlScaledVal[ i ] =
                Floor ( StrengthControlVal[ i ] * ( ( 1 << inpTensorBitDepthY ) - 1 ) )
        else if( nnpfc inp order idc == 1 )
            strengthControlScaledVal[ i ] =
                Floor ( StrengthControlVal[ i ] * ( ( 1 << inpTensorBitDepthC ) - 1 ) )
```

(continued)

```
    else
        strengthControlScaledVal[ i ] = StrengthControlVal[ i ]
```

A patch is a rectangular array of samples from a component (e.g., a luma or chroma component) of a picture.
The process DeriveInputTensors( ), for deriving the input tensor inputTensor for a given vertical sample coordinate cTop and a horizontal sample coordinate cLeft specifying the top-left sample location for the patch of samples included in the input tensor, may be specified as shown in a combination of Table 10 to Table 12.

[Table 10]

```
for( i = 0; i < numInputPics; i++ ) {
    if( nnpfc_inp_order_idc = = 0 )
        for( yP = -nnpfc_overlap; yP < inpPatchHeight + nnpfc_overlap; yP++)
        for( xP = -nnpfc_overlap; xP < inpPatchWidth + nnpfc_overlap; xP++ ) {
            inpVal = InpY( InpSampleVal( cTop + yP, cLeft + xP, CroppedHeight,
                CroppedWidth, CroppedYPic[ i ], 0 ) )
            yPovlp = yP + nnpfc_overlap
            xPovlp = xP + nnpfc_overlap|
            if( !nnpfc_component_last_flag )
                inputTensor[ 0 ][ i ][ 0 ][ yPovlp ][ xPovlp ] = inpVal
            else
                inputTensor[ 0 ][ i ][ yPovlp ][ xPovlp ][ 0 ] = inpVal
            if( nnpfc_auxiliary_inp_idc = = 1 )
                if( !nnpfc_component_last_flag )
                    inputTensor[ 0 ][ i ][ 1 ][ yPovlp ][ xPovlp ] = strengthControlScaledVal[ i ]
                else
                    inputTensor[ 0 ][ i ][ yPovlp ][ xPovlp ][ 1 ] = strengthControlScaledVal[ i ]
        }
    else if( nnpfc_inp_order_idc = = 1 )
        for( yP = -nnpfc_overlap; yP < inpPatchHeight + nnpfc_overlap; yP++)
        for( xP = -nnpfc_overlap; xP < inpPatchWidth + nnpfc_overlap; xP++ ) {
            inpCbVal = InpC( InpSampleVal( cTop + yP, cLeft + xP, CroppedHeight / SubHeightC,
                CroppedWidth / SubWidthC, CroppedCbPic[ i ], 1 ) )
            inpCrVal = InpC( InpSampleVal( cTop + yP, cLeft + xP, CroppedHeight / SubHeightC,
                CroppedWidth / SubWidthC, CroppedCrPic[ i ], 2 ) )
            yPovlp = yP + nnpfc_overlap
            xPovlp = xP + nnpfc_overlap
            if( !nnpfc_component__last_flag ) {
                inputTensor[ 0 ][ i ][ 0 ][ yPovlp ][ xPovlp ] = inpCbVal
                inputTensor[ 0 ][ i ][ 1 ][ yPovlp ][ xPovlp ] = inpCrVal
            } else {
                inputTensor[ 0 ][ i ][ yPovlp ][ xPovlp ][ 0 ] = inpCbVal
                inputTensor[ 0 ][ i ][ yPovlp ][ xPovlp ][ 1 ] = inpCrVal
            }
            if( nnpfc_auxiliary_inp_idc = = 1 )
                if( !nnpfc_component_last_flag )
                    inputTensor[ 0 ][ i ][ 2 ][ yPovlp ][ xPovlp ] = strengthControlScaledVal[ i ]
                else
                    inputTensor[ 0 ][ i ][ yPovlp ][ xPovlp ][ 2 ] = strengthControlScaledVal[ i ]
        }
```

[Table 11]

```
else if( nnpfc_inp_order_idc = = 2 )
  for( yP = -nnpfc_overlap; yP < inpPatchHeight + nnpfc_overlap; yP++)
    for( xP = -nnpfc_overlap; xP < inpPatchWidth + nnpfc_overlap; xP++ ) {
      yY = cTop + yP
      xY = cLeft + xP
      yC = yY / SubHeightC
      xC = xY / SubWidthC
      inpYVal = InpY( InpSampleVal( yY, xY, CroppedHeight,
          CroppedWidth, CroppedYPic[ i ], 0 ) )
      inpCbVal = InpC( InpSampleVal( yC, xC, CroppedHeight / SubHeightC,
          CroppedWidth / SubWidthC, CroppedCbPic[ i ], 1 ) )
      inpCrVal = InpC( InpSampleVal( yC, xC, CroppedHeight / SubHeightC,
          CroppedWidth / SubWidthC, CroppedCrPic[ i ], 2 ) )
      yPovlp = yP + nnpfc_overlap
      xPovlp = xP + nnpfc_overlap
      if( !nnpfc_component_last_flag ) {
        inputTensor[ 0 ][ i ][ 0 ][ yPovlp ][ xPovlp ] = inpYVal
        inputTensor[ 0 ][ i ][ 1 ][ yPovlp ][ xPovlp ] = inpCbVal
        inputTensor[ 0 ][ i ][ 2 ][ yPovlp ][ xPovlp ] = inpCrVal
      } else {
        inputTensor[ 0 ][ i ][ yPovlp ][ xPovlp ][ 0 ] = inpYVal
        inputTensor[ 0 ][ i ][ yPovlp ][ xPovlp ][ 1 ] = inpCbVal
        inputTensor[ 0 ][ i ][ yPovlp ][ xPovlp ][ 2 ] = inpCrVal
      }
      if( nnpfc_auxiliary_inp_idc = = 1 )
        if( !nnpfc_component_last_flag )
            inputTensor[ 0 ][ i ][ 3 ][ yPovlp ][ xPovlp ] = strengthControlScaledVal[ i ]
          else
            inputTensor[ 0 ][ i ][ yPovlp ][ xPovlp ][ 3 ] = strengthControlScaledVal[ i ]
    }
else if( nnpfc_inp_order_idc = = 3 )
  for( yP = -nnpfc_overlap; yP < inpPatchHeight + nnpfc_overlap; yP++)
    for( xP = -nnpfc_overlap; xP < inpPatchWidth + nnpfc_overlap; xP++ ) {
      yTL = cTop + yP * 2
      xTL = cLeft + xP * 2
      yBR = yTL + 1
      xBR = xTL + 1
      yC = cTop / 2 + yP
      xC = cLeft / 2 + xP
      inpTLVal = InpY( InpSampleVal( yTL, xTL, CroppedHeight,
          CroppedWidth, CroppedYPic[ i ], 0 ) )
      inpTRVal = InpY( InpSampleVal( yTL, xBR, CroppedHeight,
          CroppedWidth, CroppedYPic[ i ], 0 ) )
      inpBLVal = InpY( InpSampleVal( yBR, xTL, CroppedHeight,
          CroppedWidth, CroppedYPic[ i ], 0 ) )
      inpBRVal = InpY( InpSampleVal( yBR, xBR, CroppedHeight,
          CroppedWidth, CroppedYPic[ i ], 0 ) )
      inpCbVal = InpC( InpSampleVal( yC, xC, CroppedHeight / 2,
          CroppedWidth / 2, CroppedCbPic[ i ], 1 ) )
      inpCrVal = InpC( InpSampleVal( yC, xC, CroppedHeight / 2,
          CroppedWidth / 2, CroppedCrPic[ i ], 2 ) )
```

(continued)

```
yPovlp = yP + nnpfc_overlap
xPovlp = xP + nnpfc_overlap
if( !nnpfc_component__last_flag ) {
```

[Table 12]

```
      inputTensor[ 0 ][ i ][ 0 ][ yPovlp ][ xPovlp ] = inpTLVal
      inputTensor[ 0 ][ i ][ 1 ][ yPovlp ][ xPovlp ] = inpTRVal
      inputTensor[ 0 ][ i ][ 2 ][ yPovlp ][ xPovlp ] = inpBLVal
      inputTensor[ 0 ][ i ][ 3 ][ yPovlp ][ xPovlp ] = inpBRVal
      inputTensor[ 0 ][ i ][ 4 ][ yPovlp ][ xPovlp ] = inpCbVal
      inputTensor[ 0 ][ i ][ 5 ][ yPovlp ][ xPovlp ] = inpCrVal
    } else {
      inputTensor[ 0 ][ i ][ yPovlp ][ xPovlp ][ 0 ] = inpTLVal
      inputTensor[ 0 ][ i ][ yPovlp ][ xPovlp ][ 1 ] = inpTRVal
      inputTensor[ 0 ][ i ][ yPovlp ][ xPovlp ][ 2 ] = inpBLVal
      inputTensor[ 0 ][ i ][ yPovlp ][ xPovlp ][ 3 ] = inpBRVal
      inputTensor[ 0 ][ i ][ yPovlp ][ xPovlp ][ 4 ] = inpCbVal
      inputTensor[ 0 ][ i ][ yPovlp ][ xPovlp ][ 5 ] = inpCrVal
    }
    if( anpfc_auxiliary_inp_idc == 1 )
      if( !nnpfc_component_last_flag )
        inputTensor[ 0 ][ i ][ 6 ][ yPovlp ][ xPovlp ] = strengthControlScaledVal[ i ]
      else
        inputTensor[ 0 ][ i ][ yPovlp ][ xPovlp ][ 6 ] = strengthControlScaledVal[ i ]
  }
}
```

nnpfc_outformat_idc equal to 0 may indicate that the sample values output by the NNPF are real numbers where the value range of 0 to 1, inclusive, maps linearly to the unsigned integer value range of 0 to ( 1 << bitDepth ) - 1, inclusive, for any desired bit depth bitDepth for subsequent post-processing or displaying. nnpfc_out_format_idc equal to 1 may indicate that the luma sample values output by the NNPF are unsigned integer numbers in the range of 0 to ( 1 << outTensorBitDepth$_Y$ ) - 1, inclusive, and the chroma sample values output by the NNPF are unsigned integer numbers in the range of 0 to ( 1 << outTensorBitDepth$_C$ ) - 1, inclusive. Values of nnpfc_out_format_idc greater than 1 may be reserved for future use and shall not be present in bitstreams. Decoders shall ignore NNPFC SEI messages that contain reserved values of nnpfc_out_format_idc.

nnpfc_out_order_idc may indicate the output order of samples resulting from the NNPF. The value of nnpfc_out_order_idc shall be in the range of 0 to 3, inclusive, in bitstreams. Values of 4 to 255, inclusive, for nnpfc_out_order_idc may be reserved for future use and shall not be present in bitstreams. Decoders shall ignore NNPFC SEI messages with nnpfc_out_order_idc in the range of 4 to 255, inclusive. Values of nnpfc_out_order_idc greater than 255 shall not be present in bitstreams and are not reserved for future use. When chromaUpsamplingFlag is equal to 1, nnpfcout_order_idc shall not be equal to 0 or 3. When colourizationFlag is equal to 1, nnpfc_out_order_idc shall not be equal to 0.

Table 13 shows an informative description of nnpfc_out_order_idc values.

[Table 13]

| nnpfc_out_order_idc | Description |
| --- | --- |
| 0 | Since only a luma matrix is present in the output tensor, the number of channels may be equal to 1. |
| 1 | Since only chroma luma matrices are present in the output tensor, the number of channels may be equal to 2. |
| 2 | Since luma and chroma matrices are present in the output tensor, the number of channels may be equal to 3. |

(continued)

| nnpfc_out_order_idc | Description |
|---|---|
| 3 | Since four luma matrices and two chroma matrices are present in the output tensor, the number of channels may be equal to 6. nnpfc_out_order_idc may be used only when the output chroma format is 4:2:0. |
| 4 ... 255 | reserved |

nnpfc_out_tensor_luma_bitdepth_minus8 + 8 may specify the bit depth of luma sample values in the output integer tensor. The value of nnpfc_out_tensor_luma_bitdepth_minus8 shall be in the range of 0 to 24, inclusive. The value of $outTensorBitDepth_Y$ may be derived as shown in Equation 7.

[Equation 7]

$$outTensorBitDepth_Y = nnpfc\_out\_tensor\_luma\_bitdepth\_minus8 + 8$$

nnpfc_out_tensor_chroma_bitdepth_minus8 + 8 may specify the bit depth of chroma sample values in the output integer tensor. The value of nnpfc_out_tensor_chroma_bitdepth_minus8 shall be in the range of 0 to 24, inclusive. The value of outTensorBitDepthc may be derived as shown in Equation 8.

[Equation 8]

$$outTensorBitDepth_C = nnpfc\_out\_tensor\_chroma\_bitdepth\_minus8 + 8$$

When bitDepthUpsamplingFlag is equal to 1, the value of nnpfc_out_format_idc shall be equal to 1 and at least one of the following conditions shall be true:

- nnpfc_out_tensor_luma_bitdepth_minus8+8 is present and $outTensorBitDepth_Y$ is greater than $BitDepth_Y$.

nnpfc_out_tensor_chroma_bitdepth_minus8+8 is present and outTensorBitDepthc is greater than BitDepthc.
When nnpfc_inp_tensor_luma_bitdepth_minus8, nnpfc_inp_tensor_chroma_bitdepth_minus8,

nnpfc_out_tensor _luma_bitdepth_minus8, and nnpfc_out_tensor_chroma_bitdepth_minus8 are present and out-TensorBitDepth_Y is greater than inpTensorBitDepth_Y, outTensorBitDepthc shall not be less than inpTensorBitDepthc. When nnpfc_inp_tensor_luma_bitdepth_minus8, nnpfc_inp_tensor_chroma_bitdepth_minus8, nnpfc_out_tensor_luma_bitdepth_minus8, and nnpfc_out_tensor_chroma_bitdepth_minus8 are present and out-TensorBitDepthc is greater than inpTensorBitDepthc, outTensorBitDepth_Y shall not be less than inpTensorBitDepth_Y.

The process StoreOutputTensors(), for deriving sample values in the filtered output sample arrays FilteredYPic, FilteredCbPic, and FilteredCrPic from the output tensor for a given vertical sample coordinate cTop and a horizontal sample coordinate cLeft specifying the top-left sample location for the patch of samples included in the input tensor, may be specified as shown in a combination of Table 14 and Table 15.

[Table 14]

```
for( i = 0; i < numOutputPics; i++ ) {
    if( nnpfc out order idc == 0 )
        for( yP = 0; yP < outPatchHeight; yP++)
            for( xP = 0; xP < outPatchWidth; xP++ ) {
                yY = cTop * outPatchHeight / inpPatchHeight + yP
                xY = cLeft * outPatchWidth / inpPatchWidth + xP
                if ( yY < nnpfcOutputPicHeight && xY < nnpfcOutputPicWidth )
                    if( !nnpfc_component_last_flag )
                        FilteredYPic[ i ][ xY ][yY ] = outputTensor[ 0 ][ i ][ 0 ][ yP ][ xP ]
                    else
                        FilteredYPic[ i ][ xY ][ yY ] = outputTensor[ 0 ][ i ][ yP ][ xP ][ 0 ]
```

(continued)

```
            }
        else if( nnpfc_out_order_idc == 1 )
          for( yP = 0; yP < outPatchCHeight; yP++)
            for( xP = 0; xP < outPatchCWidth; xP++ ) {
                xSrc = cLeft * horCScaling + xP
                ySrc = cTop * verCScaling + yP
                if ( ySrc < nnpfcOutputPicHeight / outSubHeightC &&
                    xSrc < nnpfcOutputPicWidth / outSubWidthC )
                if( !nnpfc_component_last_flag ) {
                    FilteredCbPic[ i ][ xSrc ][ ySrc ] = outputTensor[ 0 ][ i ][ 0 ][ yP ][ xP ]
                    FilteredCrPic[ i ][ xSrc ][ ySrc ] = outputTensor[ 0 ][ i ][ 1 ][ yP ][ xP ]
                } else {
                    FilteredCbPic[ i ][ xSrc ][ ySrc ] = outputTensor[ 0 ][ i ][ yP ][ xP ][ 0 ]
                    FilteredCrPic[ i ][ xSrc ][ ySrc ] = outputTensor[ 0 ][ i ][ yP ][ xP ][ 1 ]
                }
            }
        else if( nnpfc_out_order_idc == 2 )
          for( yP = 0; yP < outPatchHeight; yP++)
            for( xP = 0; xP < outPatchWidth; xP++ ) {
                yY = cTop * outPatchHeight / inpPatchHeight + yP
                xY = cLeft * outPatchWidth / inpPatchWidth + xP
                yC = yY / outSubHeightC
                xC = xY / outSubWidthC
                yPc = ( yP / outSubHeightC ) * outSubHeightC
                xPc = ( xP / outSubWidthC ) * outSubWidthC
                if ( yY < nnpfcOutputPicHeight && xY < nnpfcOutputPicWidth )
```

[Table 15]

```
            if( !nnpfc component last flag ) {
                FilteredYPic[ i ][ xY ][ yY ] = outputTensor[ 0 ][ i ][ 0 ][ yP ][ xP ]
                FilteredCbPic[ i ][ xC ][ yC ] = outputTensor[ 0 ][ i ][ 1 ][ yPc ][ xPc ]
                FilteredCrPic[ i ][ xC ][ yC ] = outputTensor[ 0 ][ i ][ 2 ][ yPc ][ xPc ]
            } else {
                FilteredYPic[ i ][ xY ][ yY ] = outputTensor[ 0 ][ i ][ yP ][ xP ][ 0 ]
                FilteredCbPic[ i ][ xC ][ yC ] = outputTensor[ 0 ][ i ][ yPc ][ xPc ][ 1 ]
                FilteredCrPic[ i ][ xC ][ yC ] = outputTensor[ 0 ][ i ][ yPc ][ xPc ][ 2 ]
            }
        }
    else if( nnpfc out order idc = = 3 )
      for( yP = 0; yP < outPatchHeight; yP++ )
        for( xP = 0; xP < outPatchWidth; xP++ ) {
            ySrc = cTop / 2 * outPatchHeight / inpPatchHeight + yP
            xSrc = cLeft / 2 * outPatchWidth / inpPatchWidth + xP
            if ( ySrc < nnpfcOutputPicHeight / 2 &&
                xSrc < nnpfcOutputPicWidth / 2 )
            if( !nnpfc component last flag ) {
                FilteredYPic[ i ][ xSrc * 2 ][ ySrc * 2 ] = outputTensor[ 0 ][ i ][ 0 ][ yP ][ xP ]
                FilteredYPic[ i ][ xSrc * 2 + 1 ][ ySrc * 2 ] = outputTensor[ 0 ][ i ][ 1 ][ yP ][ xP ]
                FilteredYPic[ i ][ xSrc * 2 ][ ySrc * 2 + 1 ] = outputTensor[ 0 ][ i ][ 2 ][ yP ][ xP ]
                FilteredYPic[ i ][ xSrc * 2 + 1][ ySrc * 2 + 1 ] = outputTensor[ 0 ][ i ][ 3 ][ yP ][ xP ]
                FilteredCbPic[ i ][ xSrc ][ ySrc ] = outputTensor[ 0 ][ i ][ 4 ][ yP ][ xP ]
```

(continued)

```
                FilteredCrPic[ i ][ xSrc ][ ySrc ] = outputTensor[ 0 ][ i ][ 5 ][ yP ][ xP ]
            } else {
                FilteredYPic[ i ][ xSrc * 2 ][ ySrc * 2 ] = outputTensor[ 0 ][ i ][ yP ][ xP ][ 0 ]
                FilteredYPic[ i ][ xSrc * 2 + 1 ][ ySrc * 2 ] = outputTensor[ 0 ][ i ][ yP ][ xP ][ 1 ]
                FilteredYPic[ i ][ xSrc * 2 ][ ySrc * 2 + 1 ] = outputTensor[ 0 ][ i ][ yP ][ xP ][ 2 ]
                FilteredYPic[ i ][ xSrc * 2 + 1][ ySrc * 2 + 1 ] = outputTensor[ 0 ][ i ][ yP ][ xP ][ 3 ]
                FilteredCbPic[ i ][ xSrc ][ ySrc ] = outputTensor[ 0 ][ i ][ yP ][ xP ][ 4 ]
                FilteredCrPic[ i ][ xSrc ][ ySrc ] = outputTensor[ 0 ][ i ][ yP ][ xP ][ 5 ]
            }
        }
    }
```

nnpfc_separate_colour_description_present_flag equal to 1 may indicate that a distinct combination of colour primaries, transfer characteristics, matrix coefficients, and scaling and offset values applied in association with the matrix coefficients for the picture resulting from the NNPF is specified in the SEI message syntax structure. nnpfc_separate_colour_description_present_flag equal to 0 indicates that the combination of colour primaries, transfer characteristics, matrix coefficients, and scaling and offset values applied in association with the matrix coefficients for the picture resulting from the NNPF is the same as indicated in VUI parameters for the CLVS.

nnpfc_colour_primaries may have the same semantics as defined for the vui_colour_primaries syntax element, except as follows:

- nnpfc_colour_primaries may specify the colour primaries of the picture resulting from applying the NNPF specified in the SEI message, rather than the colour primaries used for the CLVS.
- When nnpfc_colour_primaries is not present in the NNPFC SEI message, the value of nnpfc _colour_primaries may be inferred to be equal to vui_colour_primaries.

nnpfc_transfer_characteristics may have the same semantics as defined for the vui _transfer_characteristics syntax element, except as follows:

- nnpfc _transfer_characteristics may specify the transfer characteristics of the picture resulting from applying the NNPF specified in the SEI message, rather than the transfer characteristics used for the CLVS.
- When nnpfc _transfer_characteristics is not present in the NNPFC SEI message, the value of nnpfc_transfer__characteristics may be inferred to be equal to vui_transfer_characteristics.

nnpfc_matrix_coeffs may describe equations used to derive luma and chroma signals from green, blue and red or Y, Z and X primaries. The semantics of nnpfc_matrix_coeffs may be applied to pictures resulting from applying NNPF specified in the SEI message, and BitDepthY and BitDepthC may be equal to outTensorBitDepthY and outTensorBitDepthC, respectively, as indicated for MatrixCoefficients. When nnpfc_matrix_coeffs is not present in the NNPFC SEI message, the value of nnpfc_matrix_coeffs may be inferred to be equal to vui_matrix_coeffs.

nnpfc_matrix_coeffs shall not be equal to 0 unless both of the following conditions are true:

- nnpfc_out_tensor_chroma_bitdepth_minus8 is equal to nnpfc_out_tensor_luma_bitdepth_minus8.
- nnpfc_out_order_idc is equal to 2, outSubHeightC is equal to 1, and outSubWidthC is equal to 1.

nnpfc_matrix_coeffs shall not be equal to 8 unless one of the following conditions is true:

- nnpfc_out_tensor_chroma_bitdepthminus8 is equal to nnpfc_out_tensor_luma_bitdepth_minus8.
- nnpfc_out_tensor_chroma_bitdepth_minus8 is equal to nnpfc_out_tensor_luma _bitdepth_minus8 + 1, nnpfc_out_order_idc is equal to 2, outSubHeightC is equal to 1, and outSubWidthC is equal to 1.

nnpfc_full_range_flag may indicate the scaling and offset values applied in association with the matrix coefficients as specified by nnpfc_matrix_coeffs. The semantics of nnpfc_full_range_flag are as specified for VideoFullRangeFlag. When nnpfc_full_range_flag is not present, the value of nnpfc_full_range_flag may be inferred to be equal to 0.

nnpfc_chroma_loc_info_present_flag equal to 1 may indicate the presence of the nnpfc_chroma_sample_loc_type_frame syntax element in the NNPFC SEI message. nnpfc_chroma_loc_info_present_flag equal to 0 may indicate the absence of the nnpfc chroma sample_loc_type_frame syntax element in the NNPFC SEI message. When colourizationFlag is equal to 0 or nnpfc_out_colour_format_idc is not equal to 1, the value of nnpfc_chroma_loc_info_present_flag shall be equal to 0.

When nnpfc_chroma_sample_loc_type_frame is not equal to 6 and nnpfc_out_colour_format_idc is equal to 1, nnpfc chroma_sample_loc_type_frame may specify the location of chroma samples of the output pictures. nnpfc_chroma_sample_loc_type_frame equal to 6 and nnpfc_out_colour_format_idc equal to 1 may indicate that the location of the chroma samples is unknown or unspecified or specified by other methods. The value of nnpfc_chroma_sample_loc_type_frame shall be in the range of 0 to 6, inclusive.

nnpfc_overlap may indicate the overlapping horizontal and vertical sample counts of adjacent input tensors of the NNPF. The value of nnpfc_overlap shall be in the range of 0 to 16 383, inclusive.

nnpfc_constant_patch_size_flag equal to 1 may indicate that the NNPF accepts exactly the patch size indicated by nnpfc_patch_width_minus1 and nnpfc_patch_height__minus1 as input. nnpfc_constant_patch_size_flag equal to 0 may indicate that the NNPF accepts as input any patch size with width inpPatchWidth and height inpPatchHeight such that the width of an extended patch (i.e., a patch plus the overlapping area), which is equal to inpPatchWidth + 2 * nnpfc_overlap, is a positive integer multiple of nnpfc_extended_patch_width_cd_delta_minus 1 + 1 + 2 * nnpfc_overlap, and the height of the extended patch, which is equal to inpPatchHeight + 2 * nnpfc_overlap, is a positive integer multiple of nnpfc_extended_patch_height_cd_delta_minus1 + 1 + 2 * nnpfc_overlap.

nnpfc_patch_width__minus1 + 1, when nnpfc_constant_patch_size_flag equal to 1, may indicate the horizontal sample counts of the patch size required for the input to the NNPF. The value of nnpfc_patch_width_minus1 shall be in the range of 0 to Min( 32 766, CroppedWidth - 1 ), inclusive.

nnpfc_patch_height_minus1 + 1, when nnpfc_constant_patch_size_flag equal to 1, may indicate the vertical sample counts of the patch size required for the input to the NNPF. The value of nnpfc_patch_height_minus1 shall be in the range of 0 to Min( 32 766, CroppedHeight - 1 ), inclusive.

nnpfc_extended_patch_width_cd_delta_minus1 + 1 + 2 * nnpfc_overlap, when nnpfc_constant_patch_size_flag equal to 0, may indicate a common divisor of all allowed values of the width of an extended patch required for the input to the NNPF. The value of nnpfc_extended_patchwidth_cd_delta_minus1 shall be in the range of 0 to Min( 32 766, CroppedWidth - 1 ), inclusive.

nnpfc_extended_patch_height_cd_delta_minus1 + 1 + 2 * nnpfc_overlap, when nnpfc_constant_patch_size_flag equal to 0, may indicate a common divisor of all allowed values of the height of an extended patch required for the input to the NNPF. The value of nnpfc_extended_patch_height_cd_delta_minus1 shall be in the range of 0 to Min( 32 766, CroppedHeight - 1 ), inclusive.

The variables inpPatchWidth and inpPatchHeight may be set to the patch size width and the patch size height, respectively.

If nnpfc _constant_patch_size_flag is equal to 0, the following applies:

- The values of inpPatchWidth and inpPatchHeight may be either provided by external means or set by the post-processor itself.
- The value of inpPatchWidth + 2 * nnpfc_overlap shall be a positive integer multiple ofnnpfc_extended_patch_width_cd _delta__minus1 + 1 + 2 * nnpfc_overlap and inpPatchWidth shall be less than or equal to CroppedWidth. The value of inpPatchHeight + 2 * nnpfc_overlap shall be a positive integer multiple ofnnpfc_extended_patch_height_cd_delta__minus1 + 1 + 2 * nnpfc_overlap and inpPatchHeight shall be less than or equal to CroppedHeight.

Otherwise (nnpfc _constant_patch_size_flag is equal to 1), the value of inpPatchWidth may be set equal to nnpfc_patch_width_minus1 + 1 and the value of inpPatchHeight may be set equal to nnpfc_patch _height__minus1 + 1.

The variables outPatchWidth, outPatchHeight, horCScaling, verCScaling, outPatchCWidth, and outPatchCHeight may be derived as shown in Table 16.

[Table 16]

```
outPatchWidth = ( nnpfcOutputPicWidth * inpPatchWidth ) / CroppedWidth
outPatchHeight = ( nnpfcOutputPicHeight * inpPatchHeight ) / CroppedHeight
horCScaling = SubWidthC / outSubWidthC
verCScaling = SubHeightC / outSubHeightC
outPatchCWidth = outPatchWidth * horCScaling
outPatchCHeight = outPatchHeight * verCScaling
```

It is a requirement of bitstream conformance that outPatchWidth * CroppedWidth shall be equal to nnpfcOutputPicWidth * inpPatchWidth and outPatchHeight * CroppedHeight shall be equal to nnpfcOutputPicHeight * inpPatchHeight.

nnpfc_padding_type may indicate the process of padding when referencing sample locations outside the boundaries of the input picture as described in Table 17. The value of nnpfc_padding_type shall be in the range of 0 to 4, inclusive. Values of 5 to 15, inclusive, for nnpfc_padding_type may be reserved for future use and shall not be present in bitstreams. Decoders shall ignore NNPFC SEI messages with nnpfc_padding_type in the range of 5 to 15, inclusive. Values of nnpfc_padding_type greater than 15 shall not be present in bitstreams and are not reserved for future use.

[Table 17]

| nnpfc_padding_type | Description |
| --- | --- |
| 0 | zero padding |
| 1 | replication padding |
| 2 | reflection padding |
| 3 | wrap-around padding |
| 4 | fixed padding |
| 5 ... 15 | reserved |

nnpfc_luma_padding_val may indicate the luma value to be used for padding when nnpfc_padding_type is equal to 4. The value of nnpfc _luma_padding _val shall be in the range of 0 to ( 1 << $BitDepth_Y$ ) - 1, inclusive.

nnpfc _cb_padding _val may indicate the Cb value to be used for padding when nnpfc_padding_type is equal to 4. The value of nnpfc _cb_padding_val shall be in the range of 0 to ( 1 << $BitDepth_C$ ) - 1, inclusive.

nnpfc_cr_padding_val may indicate the Cr value to be used for padding when nnpfc_padding _type is equal to 4. The value of nnpfc_cr_padding_val shall be in the range of 0 to ( 1 << $BitDepth_C$ ) - 1, inclusive.

The function InpSampleVal( y, x, picHeight, picWidth, croppedPic, cIdx ) with inputs being a vertical sample location y, a horizontal sample location x, a picture height picHeight, a picture width picWidth, sample array croppedPic, and component index cIdx (equal to 0 for luma, 1 for Cb, and 2 for Cr) may return the value of sampleVal derived as shown in Table 18.

[Table 18]

```
if( anpfc_padding_type = = 0)
   if( y < 0 || x < 0 || y >= picHeight || x >= picWidth )
      sampleVal = 0
   else
      sampleVal = croppedPic[ x ][ y ]
else if( nnpfc padding type = = 1 )
   sampleVal = croppedPic[ Clip3( 0, picWidth - 1, x ) ][ Clip3( 0, picHeight - 1, y ) ]
else if( nnpfc padding type = = 2 )
   sampleVal = croppedPic[ Reflect( picWidth - 1, x ) ][ Reflect( picHeight - 1, y ) ]
else if( nnpfc_padding_type = = 3 )
   if( y >= 0 && y < picHeight )
      sampleVal = croppedPic[ Wrap( picWidth - 1, x ) ][ y ]
else if( nnpfc padding type = = 4 )
   if( y < 0 || x < 0 || y >= picHeight || x >= picWidth )
      sampleVal = ( cIdx = = 0 ? nnpfc_luma_padding_val :
         ( cIdx = = 1 ? nnpfc cb padding val : nnpfc cr padding val ) )
   else
      sampleVal = croppedPic[ x ][ y ]
```

An NNPF PostProcessingFilter( ) is the target NNPF as derived in the semantics of the NNPFA SEI message.

The process of Table 19 may be used, with the NNPF PostProcessingFilter( ), to generate, in a patch-wise manner, the filtered and/or interpolated picture(s), which may contain Y, Cb, and Cr sample arrays FilteredYPic, FilteredCbPic, and FilteredCrPic, respectively, as indicated by nnpfc_out_order_idc:

[Table 19]

```
if( nnpfc_inp_order_idc = = 0 || nnpfc_inp_order_idc = = 2 )
   for( cTop = 0; cTop < CroppedHeight; cTop += inpPatchHeight )
      for( cLeft = 0; cLeft < CroppedWidth; cLeft += inpPatchWidth ) {
         DeriveInputTensors( )
         outputTensor = PostProcessingFilter( inputTensor )
         StoreOutputTensors( )
      }
else if( nnpfc_inp_order_idc = = 1 )
   for( cTop = 0; cTop < CroppedHeight / SubHeightC; cTop += inpPatchHeight )
      for( cLeft = 0; cLeft < CroppedWidth / SubWidthC; cLeft += inpPatchWidth ) {
         DeriveInputTensors( )
         outputTensor = PostProcessingFilter( inputTensor )
         StoreOutputTensors( )
      }
else if( nnpfc_inp_order_idc = = 3 )
   for( cTop = 0; cTop < CroppedHeight; cTop += inpPatchHeight * 2 )
      for( cLeft = 0; cLeft < CroppedWidth; cLeft += inpPatchWidth * 2 ) {
         DeriveInputTensors( )
         outputTensor = PostProcessingFilter( inputTensor )
         StoreOutputTensors( )
      }
```

An NNPF-generated picture with index i may contain sample arrays FilteredYPic[ i ], FilteredCbPic[ i ], and FilteredCrPic[ i ], when present. An NNPF-generated picture may not include the overlap regions.

The NNPF process consists of the process defined in Table 19 followed by outputting NNPF-generated pictures in their increasing index order, where all NNPF-generated pictures that were interpolated by the NNPF are output and those NNPF-generated pictures that correspond to any input pictures to the NNPF may be output as specified in the semantics of the NNPFA SEI message.

nnpfc_complexity_info_present_flag equal to 1 may specify that one or more syntax elements that indicate the complexity of the NNPF associated with the nnpfc_id are present. nnpfc_complexity_info_present_flag equal to 0 may specify that no syntax elements that indicates the complexity of the NNPF associated with the nnpfc_id are present.

nnpfc_parameter_type_idc equal to 0 may indicate that the neural network uses only integer parameters. nnpfc_parameter_type _flag equal to 1 may indicate that the neural network may use floating point or integer parameters. nnpfc_parametertype_idc equal to 2 may indicate that the neural network uses only binary parameters. nnpfc_parameter_type_idc equal to 3 may be reserved for future use and shall not be present in bitstreams. Decoders shall ignore NNPFC SEI messages with nnpfc_parametertype_idc equal to 3.

nnpfc_log2_parameter_bit_length_minus3 equal to 0, 1, 2, and 3 may indicate that the neural network does not use parameters of bit length greater than 8, 16, 32, and 64, respectively. When nnpfc_parameter_type_idc is present and nnpfc_log2_parameter_bit_length_minus3 is not present, the neural network may not use parameters of bit length greater than 1.

nnpfc_num_parameters_idc may indicate the maximum number of neural network parameters for the NNPF in units of a power of 2 048. nnpfc_num_parameters_idc equal to 0 may indicate that the maximum number of neural network parameters is unknown. The value nnpfc_num_parameters_idc shall be in the range of 0 to 52, inclusive. Values of nnpfc_num_parameters_idc greater than 52 are reserved for future use and shall not be present in bitstreams. Decoders shall ignore NNPFC SEI messages with nnpfc_num_parameters_idc greater than 52.

If the value of nnpfc_num_parameters_idc is greater than zero, the variable maxNumParameters is derived as shown in Equation 9.

[Equation 9]

$$maxNumParameters = ( 2\ 048 << nnpfc\_num\_parameters\_idc ) - 1$$

It is a requirement of bitstream conformance that the number of neural network parameters of the NNPF shall be less than or equal to maxNumParameters.

nnpfc_num_kmac_operations_idc greater than 0 may indicate that the maximum number of multiply-accumulate operations per sample of the NNPF is less than or equal to nnpfc_num_kmac_operations_idc * 1 000. nnpfc_num_kmac_operations_idc equal to 0 may indicate that the maximum number of multiply-accumulate operations of the network is unknown. The value of nnpfc_num_kmac_operations_idc shall be in the range of 0 to $2^{32}$ - 2, inclusive.

nnpfc_total_kilobyte_size greater than 0 may indicate a total size in kilobytes required to store the uncompressed parameters for the neural network. The total size in bits is a number equal to or greater than the sum of bits used to store each parameter. nnpfc_total_kilobyte_size is the total size in bits divided by 8 000, rounded up. nnpfc_total_kilobyte_size equal to 0 may indicate that the total size required to store the parameters for the neural network is unknown. The value of nnpfc_total_kilobyte_size shall be in the range of 0 to $2^{32}$ - 2, inclusive.

nnpfc_metadata_extension_num_bits equal to 0 may specify that nnpfc_reserved_metadata_extension is not present. nnpfc_metadata_extension_num_bits greater than 0 may specify the length, in bits, of nnpfc_reserved_metadata_extension. nnpfc_metadata_extension_num_bits shall be equal to 0. Values in the range of 1 to 2 048, inclusive, for nnpfc_metadata_extension_num_bits are reserved for future use and shall not be present in bitstreams. Decoders shall allow any value of nnpfc_metadata_extension_num_bits in the range of 0 to 2048, inclusive. Values of nnpfc_metadata_extension_num_bits greater than 2048 shall not be present in bitstreams and may not be reserved for future use.

nnpfc_reserved_metadata_extension shall not be present in bitstreams. However, decoders shall ignore the presence and value of nnpfc_reserved_metadata_extension. When present, the length, in bits, of nnpfc_reserved_metadata_extension may be equal to nnpfc_metadata_extension_num_bits.

nnpfc_reserved_zero_bit_b shall be equal to 0 in bitstreams. Decoders shall ignore NNPFC SEI messages in which nnpfc_reserved_zero_bit_b is not equal to 0.

nnpfc_payload_byte[ i ] may contain the i-th byte of a bitstream. The byte sequence nnpfc_payload_byte[ i ] for all present values of i shall be a complete bitstream that conforms to ISO/IEC 15938-17.

Neural-network post-filter activation (NNFPA)

The syntax structure for the NNFPA is shown in Table 20.

[Table 20]

| nn_post_filter_activation( payloadSize ) { | **Descriptor** |
|---|---|
|   **nnpfa_target_id** | ue(v) |
|   **nnpfa_cancel_flag** | u(1) |
|   if( !nnpfa_cancel_flag ) { | |
|     **nnpfa_target_base_flag** | u(1) |
|     **nnpfa_persistence_flag** | u(1) |
|     **nnpfa_num_output_entries** | ue(v) |
|     for( i = 0; i < nnpfa_num_output_entries; i++ ) | |
|       **nnpfa_output_flag**[ i ] | u(1) |
|   } | |
| } | |

The NNPFA syntax structure of Table 20 may be signaled in the form of an SEI message. An SEI message signaling the NNPFA syntax structure of Table 20 may be referred to as an NNPFA SEI message.

The neural-network post-filter activation (NNPFA) SEI message may activate or de-activate the possible use of the target neural-network post-processing filter (NNPF), identified by nnpfa_target_id, for post-processing filtering of a set of pictures. For a particular picture for which the NNPF is activated, the target NNPF may be derived as follows:

- If nnpfa_target_base_flag is equal to 1, the target NNPF is the base NNPF with nnpfc_id equal to nnpfa_target_id.
- Otherwise (nnpfa_target_base_flag is equal to 0), the target NNPF is the NNPF specified by the last NNPFC SEI message with nnpfc_id equal to nnpfa_target_id that precedes the first VCL NAL unit of the current picture in decoding order and is not a repetition of the NNPFC SEI message that contains the base NNPF.

There may be several NNPFA SEI messages present for the same picture, for example, when the NNPFs are meant for different purposes or for filtering of different colour components.

nnpfa_target_id may indicate the target NNPF, which is specified by one or more NNPFC SEI messages that pertain to the current picture and have nnpfc_id equal to nnpfa_target_id. The value of nnpfa_target_id shall be in the range of 0 to $2^{32}$ - 2, inclusive.

An NNPFA SEI message with a particular value of nnpfa_target_id shall not be present in a current PU unless one or both of the following conditions are true:

- Within the current CLVS, there is an NNPFC SEI message with nnpfc_id equal to the particular value of nnpfa_target_id present in a PU preceding the current PU in decoding order.
- There is an NNPFC SEI message with nnpfc_id equal to the particular value of nnpfa_target_id in the current PU.

When a PU contains both an NNPFC SEI message with a particular value of nnpfc_id and an NNPFA SEI message with nnpfa_target_id equal to the particular value of nnpfc_id, the NNPFC SEI message shall precede the NNPFA SEI message in decoding order.

nnpfa_cancel_flag equal to 1 may indicate that the persistence of the target NNPF established by any previous NNPFA SEI message with the same nnpfa-target_id as the current SEI message is cancelled, i.e., the target NNPF is no longer used unless it is activated by another NNPFA SEI message with the same nnpfa_target_id as the current SEI message and nnpfa_cancel_flag equal to 0. nnpfa_cancel_flag equal to 0 may indicate that the nnpfa_target_base_flag, nnpfa_persistence_flag, and nnpfa_num_output_entries follow.

nnpfa_target_base_flag equal to 1 may specify that the target NNPF is the base NNPF with nnpfc_id equal to nnpfa_target_id. nnpfa_target_base_flag equal to 0 may specify that the target NNPF is the NNPF specified by the last NNPFC SEI message with nnpfc_id equal to nnpfa_target_id that precedes the first VCL NAL unit of the current picture in decoding order and is not a repetition of the NNPFC SEI message that contains the base NNPF.

nnpfa_persistence_flag may specify the persistence of the target NNPF for the current layer. nnpfa_persistence_flag equal to 0 may specify that the target NNPF may be used for post-processing filtering for the current picture only. nnpfa_persistence_flag equal to 1 may specify that the target NNPF may be used for post-processing filtering for the current picture and all subsequent pictures of the current layer in output order until one or more of the following conditions are true:

- A new CLVS of the current layer begins.
- The bitstream ends.
- A picture in the current layer associated with a NNPFA SEI message with the same nnpfa_target_id as the current SEI message and nnpfa_cancel_flag equal to 1 is output that follows the current picture in output order.

The target NNPF is not applied for this subsequent picture in the current layer associated with a NNPFA SEI message with the same nnpfa_target_id as the current SEI message and nnpfa_cancel_flag equal to 1.

The nnpfcTargetPictures may be the set of pictures to which the last NNPFC SEI message with nnpfc_id equal to nnpfa_target_id that precedes the current NNPFA SEI message in decoding order pertains. nnpfaTargetPictures may be the set of pictures for which the target NNPF is activated by the current NNPFA SEI message. It is a requirement of bitstream conformance that any picture included in nnpfaTargetPictures shall also be included in nnpfcTargetPictures.

nnpfa_num_output_entries may specify the number of nnpfa_output_flag[ i ] syntax elements present in the NNPFA SEI message. The value of nnpfa_num_output_entries shall be in the range of 0 to NumInpPicsInOutputTensor, inclusive.

nnpfa_output_flag[ i ] equal to 1 may specify that the NNPF-generated picture that corresponds to the input picture having index InpIdx[ i ] is output by the NNPF process activated by this NNPFA SEI message, where the NNPF process may be specified in the semantics of the NNPFC SEI message. nnpfa_output_flag[ i ] equal to 0 may specify that the NNPF-generated picture that corresponds to the input picture having index InpIdx[ i ] is not output by the NNPF process activated by this NNPFA SEI message. When nnpfa_num_output_entries is less than NumInpPicsInOutputTensor, nnpfa_output_flag i ] may be inferred to be equal to 1 for each value of i in the range of nnpfa_num_output_entries to NumInpPicsInOutputTensor - 1, inclusive.

Post-filter hint

A syntax structure for a post-filter hint is shown in Table 21.

[Table 21]

| post_filter_hint( payloadSize ) { | Descriptor |
| --- | --- |
| **filter_hint_cancel_flag** | u(1) |

(continued)

| | |
|---|---|
| if( !filter_hint_cancel_flag ) { | |
| **filter_hint_persistence_flag** | u(1) |
| **filter_hint_size_y** | ue(v) |
| **filter_hint_size_x** | ue(v) |
| **filter_hint_type** | u(2) |
| **filter_hint_chroma_coeff_present_flag** | u(1) |
| for( cldx = 0; cldx < ( filter_hint_chroma_coeff_present_flag ? 3 : 1 ); cldx++ ) | |
| for( cy = 0; cy < filter_hint_size_y; cy++ ) | |
| for( ex = 0; cx < filter_hint_size_x; cx++ ) | |
| **filter_hint_value**[ cldx ][ cy ][ cx ] | se(v) |
| } | |
| } | |

The post-filter hint syntax structure of Table 21 may be signaled in the form of an SEI message. The SEI message signaling the post-filter hint syntax structure of Table 21 may be referred to as a post-filter hint SEI message.

This SEI message provides the coefficients of a post-filter or correlation information for the design of a post-filter for potential use in post-processing of a set of pictures after they are decoded and output to obtain improved displayed quality.

filter_hint_cancel_flag equal to 1 may indicate that the SEI message cancels the persistence of any previous post-filter hint SEI message in output order that applies to the current layer. filter_hint_cancel_flag equal to 0 may indicate that post-filter hint information follows.

filter_hint_persistence_flag may specify the persistence of the post-filter hint SEI message for the current layer. filter_hint_persistence_flag equal to 0 may specify that the post-filter hint applies to the current decoded picture only. filter_hint_persistence_flag equal to 1 may specify that the post-filter hint SEI message applies to the current decoded picture and persists for all subsequent pictures of the current layer in output order until one or more of the following conditions are true:

- A new CLVS of the current layer begins.
- The bitstream ends.
- A picture in the current layer in an AU associated with a post-filter hint SEI message is output that follows the current picture in output order.

filter_hint_size_y may specify the vertical size of the filter coefficient or correlation array. The value of filter_hint_size_y shall be in the range of 1 to 15, inclusive.

filter_hint_size_x may specify the horizontal size of the filter coefficient or correlation array. The value of filter_hint_size_x shall be in the range of 1 to 15, inclusive.

filter_hint_type may identify the type of the transmitted filter hints as specified in Table 22. The value of filter_hint_type shall be in the range of 0 to 2, inclusive. The value of filter_hint_type equal to 3 may be reserved for future use and shall not be present in bitstreams. Decoders shall ignore post-filter hint SEI messages having filter_hint_type equal to 3.

[Table 22]

| Value | Description |
|---|---|
| 0 | coefficients of 2D-FIR filter |
| 1 | coefficients of two 1D-FIR filters |
| 2 | Cross-correlation matrix |

filter_hint_chroma_coeff_present_flag equal to 1 may specify that filter coefficients for chroma are present. filter_hint_chroma_coeff_present_flag equal to 0 may specify that filter coefficients for chroma are not present.

filter_hint_value[ cIdx ][ cy ][ cx ] may specify a filter coefficient or an element of a cross-correlation matrix between the original and the decoded signal with 16-bit precision. The value of filter_hint_value[ cIdx ][ cy ][ cx ] shall be in the range of $-2^{31} + 1$ to $2^{31} - 1$, inclusive. cIdx may specifies the related colour component, cy represents a counter in vertical direction and cx represents a counter in horizontal direction. Depending on the value of filter_hint_type, the following applies:

- If filter_hint_type is equal to 0, the coefficients of a 2-dimensional finite impulse response (FIR) filter with the size of filter_hint_size_y * filter_hint_size_x may be transmitted.
- Otherwise, if filter_hint_type is equal to 1, the filter coefficients of two 1-dimensional FIR filters may be transmitted. In this case, filter_hint_size_y shall be equal to 2. The index cy equal to 0 specifies the filter coefficients of the horizontal filter and cy equal to 1 specifies the filter coefficients of the vertical filter. In the filtering process, the horizontal filter is applied first and the result is filtered by the vertical filter.
- Otherwise (filter_hint_type is equal to 2), the transmitted hints may specify a cross-correlation matrix between the original signal s and the decoded signal s'.

The normalized cross-correlation matrix for a related colour component identified by cIdx with the size of filter_hint_size_y * filter_hint_size_x may be defined as shown in Equation 10.

[Equation 10]

$$filter\_hint\_value(cIdx, cy, cx)$$
$$= \frac{1}{(2^{8+bitDepth}-1)^2 * h * w} \sum_{m=0}^{h-1} \sum_{n=0}^{w-1} s(m,n) * s'(m + cy - \qquad OffsetY, n + cx - OffsetX)$$

In Equation 10, s denotes array of samples of the colour component cIdx of the original picture, s' denotes corresponding array of the decoded picture, h denotes the vertical height of the related colour component, w denotes the horizontal width of the related colour component, bitDepth denotes the bit depth of the colour component, OffsetY is equal to ( filter_hint_size_y >> 1), OffsetX is equal to ( filter_hint__size_x >> 1 ), the range of cy is 0 <= cy < filter_hint-size_y and the range of cx is 0 <= cx < filter_hint_size_x.

A decoder can derive a Wiener post-filter from the cross-correlation matrix of original and decoded signal and the autocorrelation matrix of the decoded signal.

Problems of the Related Art

In the current design for the NNPFC SEI message and the NNPFA SEI message described above, the output pictures and their associations with the input pictures are first signaled via the NNPFC SEI message. Afterwards, the output pictures and their associations with the input pictures are updated via the NNPFA SEI message which activates NNPFC. For example, each of nnpfc_num_input_pics_minus1, nnpfc_input_pic_output_flag[ i ], nnpfc_absent-input_pic_zero_flag, and nnpfc_interpolated_pics[ i ] and their semantics may correspond to the current design for the NNPFC SEI message. Additionally, each of nnpfa_num_output__entries and nnpfa_output_flag[ i ] and their semantics may correspond to the current design for the NNPFA SEI message.

In the signalling of the output pictures association with input pictures, there are constraints established to ensure that at the NNPF shall produce at least one output picture. However, when the signalling of output pictures association with input pictures is updated, the problem may occur that the activated NNPFA does not output any picture.

Embodiment

The present disclosure is to solve the above problems. Various embodiments proposed through the present disclosure may be summarized as follows. The embodiments described below may be performed individually, or two or more embodiments may be performed in combination.

1. When pictureRateUpsamplingFlag is equal to 0 and nnpfa_num_num_output_entries is equal to NumInpPicsInOutputTensor, nnpfa_output_flag [ i ] shall be equal to 1 for at least one value of i in the range of 0 to NumInpPicsInOutputTensor - 1, inclusive. Alternatively, when pictureRateUpsamplingFlag is equal to 0 and nnpfa_num_output_entries is equal to NumInpPicsInOutputTensor, nnpfa _output_flag [ i ] shall be equal to 1 for at least one value of i in the range of 0 to nnpfa_num_output_entries - 1, inclusive.

2. When pictureRateUpsamplingFlag is equal to 0, nnpfa_output_flag [ i ] shall be equal to 1 for at least one value of i in the range of 0 to NumInpPicsInOutputTensor - 1, inclusive.

3. When nnpfc_num_input_pics_minus1 is equal to 0, nnpfa_num_output_entries shall be equal to 0. In addition, when pictureRateUpsamplingFlag is equal to 0 and nnpfc_num_input_pics_minus1 is greater than 0, nnpfa_output_flag [ i ] shall be equal to 1 for at least one value of i in the range of 0 to NumInpPicsInOutputTensor - 1, inclusive. 4. When nnpfc_num_input_pics_minus1 is equal to 0 and nnpfa_num_output_entries is equal to 1, nnpfa_output_flag [ 0 ] shall be equal to 1. In addition, when pictureRateUpsamplingFlag is equal to 0 and nnpfc_num_input_pics_minus1 is greater than 0, nnpfa_output_flag [ i ] shall be equal to 1 for at least one value of i in the range of 0 to NumInpPicsInOutputTensor - 1, inclusive.

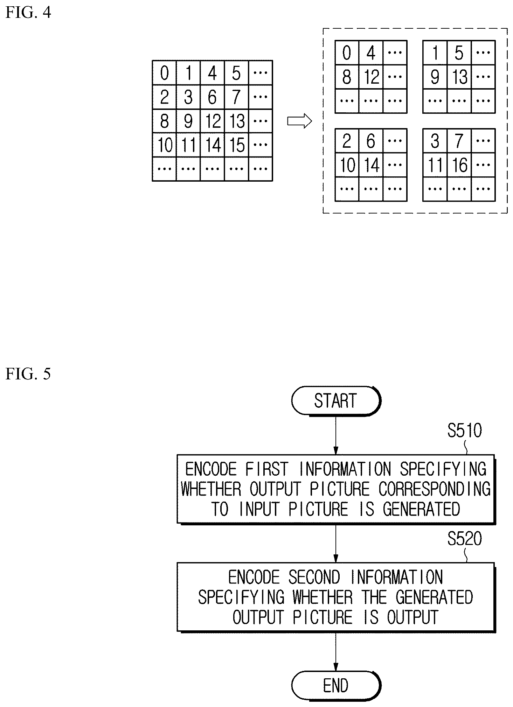

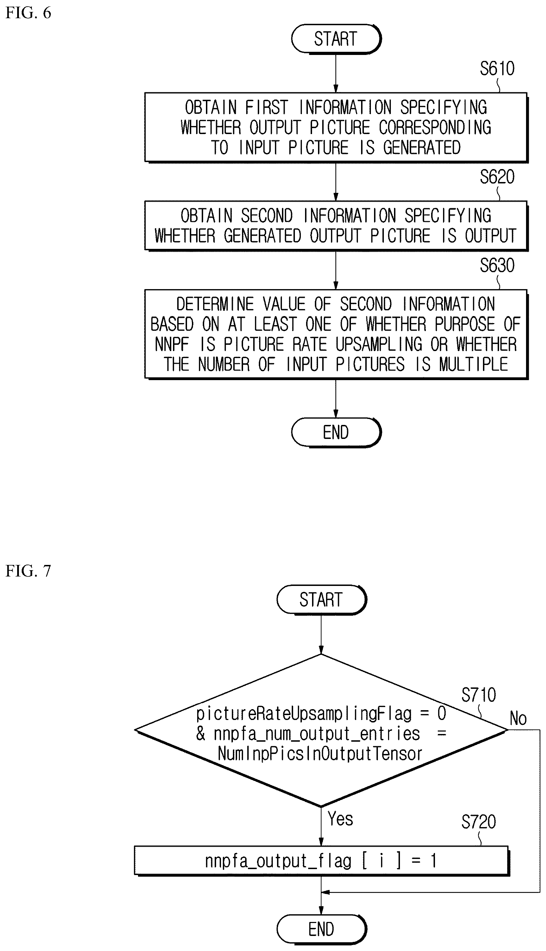

FIG. 5 is a flowchart illustrating an image encoding method according to an embodiment of the present disclosure, and FIG. 6 is a flowchart illustrating an image decoding method according to an embodiment of the present disclosure. The image encoding method of FIG. 5 may be performed by the image encoding apparatus 100, and the image decoding method of FIG. 6 may be performed by the image decoding apparatus 200.

Referring to FIG. 5, first information may be encoded in an NNPFC SEI message (S510). The first information may indicate whether at least one output picture corresponding to at least one input picture is generated. The first information may be an nnpfc_input_pic_output_flag[ i ] syntax element.

Second information may be encoded in the NNPFA SEI message (S520). The second information may indicate whether the generated output picture is output. The second information may be a nnpfa_output_flag[ i ] syntax element.

The value of the second information (e.g., nnpfa_output_flag[ i ]) may be determined based on at least one of whether the purpose of NNPF is picture rate upsampling (pictureRateUpsamplingFlag) or whether the number of input pictures is multiple (e.g., nnpfc_num_input_pics_minus1). Here, "the value of the second information is determined" may mean "the value of the second information shall be determined to be a predetermined value."

Referring to FIG. 6, first information may be obtained from an NNPFC SEI message (S610). The first information may indicate whether at least one output picture corresponding to at least one input picture is generated. The first information may be the nnpfc_input_pic_output_flag[ i ] syntax element.

Second information may be obtained from the NNPFA SEI message (S620). The second information may indicate whether the generated output picture is output. The second information may be the nnpfa_output_flag[ i ] syntax element.

The value of the second information (e.g., nnpfa_output_flag[ i ]) may be determined based on at least one of whether the purpose of NNPF is picture rate upsampling (pictureRateUpsamplingFlag) or whether the number of input pictures is multiple (e.g., nnpfc_num_input_pics_minus1). Here, "the value of the second information is determined" may mean "the value of the second information shall be determined to be a predetermined value."

Hereinafter, various embodiments proposed through the present disclosure will be specifically described. The embodiments proposed through the present disclosure may be performed individually, or two or more embodiments may be performed in combination. In addition, an embodiment corresponding to the image encoding method may be performed by the image encoding apparatus 100, and an embodiment corresponding to the image decoding method may be performed by the image decoding apparatus 200.

Embodiment 1

FIG. 7 is a flowchart for explaining an example of an image encoding/decoding method according to Embodiment 1.

Referring to FIG. 7, it may be determined whether the purpose of an NNPF for an associated NNPFC is picture rate upsampling and whether the number of pictures existing in an output tensor while having a corresponding input picture is equal to the number of second information in an NNPFA SEI message (S710). Here, whether the purpose of the NNPF is picture rate upsampling may be determined based on the value of nnpfc_purpose & 0x08 or the value of pictureRateUpsamplingFlag. In addition, the 'number of pictures existing in the output tensor while having the corresponding input picture' may be determined by the variable NumInpPicsInOutputTensor, and the 'number of second information in the NNPFA SEI message' may be determined by the nnpfa_num_output_entries syntax element.

If the purpose of the NNPF for the associated NNPFC is not picture rate upsampling (pictureRateUpsamplingFlag = 0) and the number of pictures existing in the output tensor while having the corresponding input picture is equal to the number of the second information in the NNPFA SEI message (nnpfa_num_output_entries = NumInpPicsInOutputTensor), the value of the second information (e.g., nnpfa_output_flag[ i ]) shall be equal to a first value (e.g., 1) indicating that the generated output picture is output (S720). Here, i may be at least one value in the range of 0 to nnpfa_num_output_entries - 1.

Embodiment 2

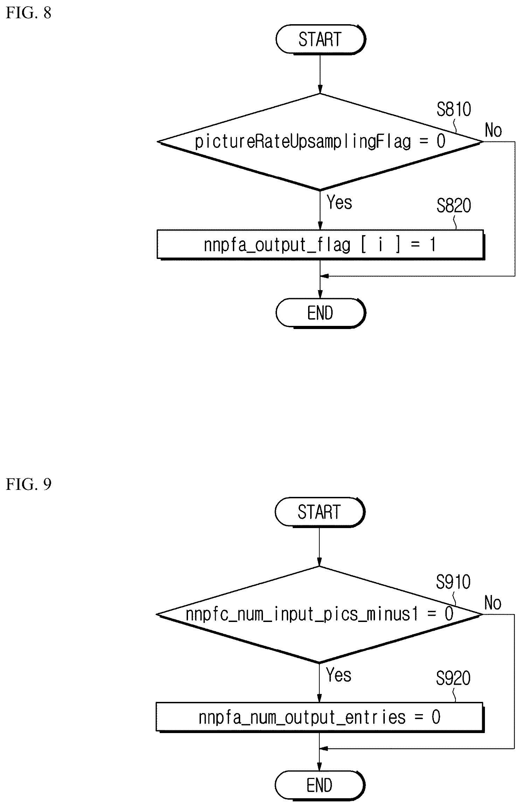

FIG. 8 is a flowchart for explaining an example of an image encoding/decoding method according to Embodiment 2.

Referring to FIG. 8, it may be determined whether the purpose of an NNPF for an associated NNPFC is picture rate upsampling (S810). Here, whether the purpose of the NNPF is picture rate upsampling may be determined based on the value of nnpfc_purpose & 0x08 or the value of pictureRateUpsamplingFlag.

If the purpose of the NNPF for the associated NNPFC is not picture rate upsampling (pictureRateUpsampling-Flag = 0), the value of second information (e.g., nnpfa_output_flag[ i ]) shall be equal to a first value (e.g., 1) indicating that the generated output picture is output (S820). Here, i may be at least one value in the range of 0 to NumInpPicsInOutputTensor - 1.

Embodiment 3

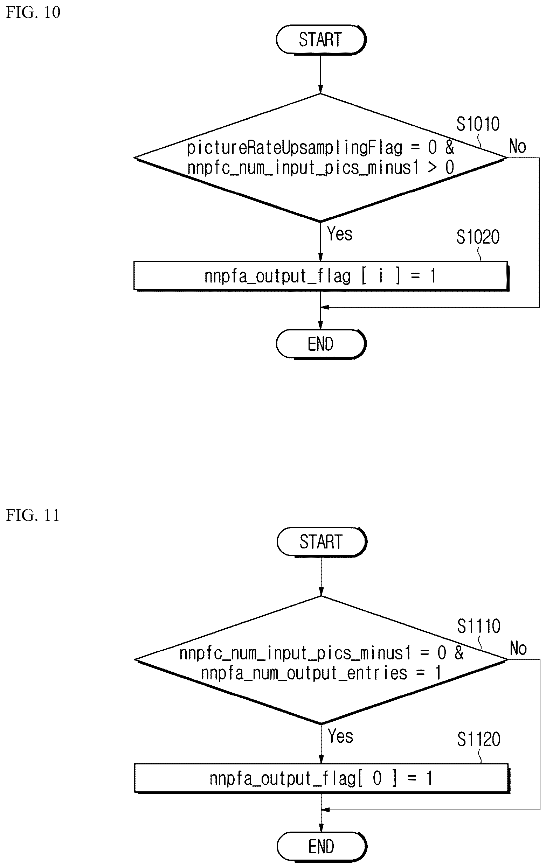

FIGS. 9 and 10 are flowcharts for explaining an example of an image encoding/decoding method according to Embodiment 3.

Referring to FIG. 9, the number of input pictures may be determined (S910). The number of input pictures may be determined by the nnpfc_num_input_pics_minus1 syntax element. If the number of input pictures is 1 (nnpfc _num_input_pics _minus1 = 0), the number of second information (e.g., nnpfa_output_flag[ i ]) shall be 0 (S920, nnpfa_num_output_entries=0). That is, if the number of input pictures is 1 (nnpfc_num_input_pics_minus1 = 0), the second information (e.g., nnpfa_output_flag[ i ]) may not be encoded in the NNPFA SEI message and may not be obtained from the NNPFA SEI message.

Referring to FIG. 10, whether the purpose of NNPF is picture rate upsampling and the number of input pictures may be determined (S1010). Here, whether the purpose of NNPF is picture rate upsampling may be determined based on the value of nnpfc_purpose & 0x08 or the value of pictureRateUpsamplingFlag. In addition, the 'number of input pictures' may be determined by the nnpfc_num_input_pics_minus 1 syntax element.

If the purpose of NNPF is not picture rate upsampling (pictureRateUpsamplingFlag = 0) and the number of input pictures is greater than 0 (nnpfc_num_input_minus1 > 0), the value of the second information (e.g., nnpfa_output_flag[i]) shall be equal to a first value (e.g., 1) indicating that the generated output picture is output (S1020). Here, i may be at least one value in the range of 0 to NumInpPicsInOutputTensor - 1.

Embodiment 4

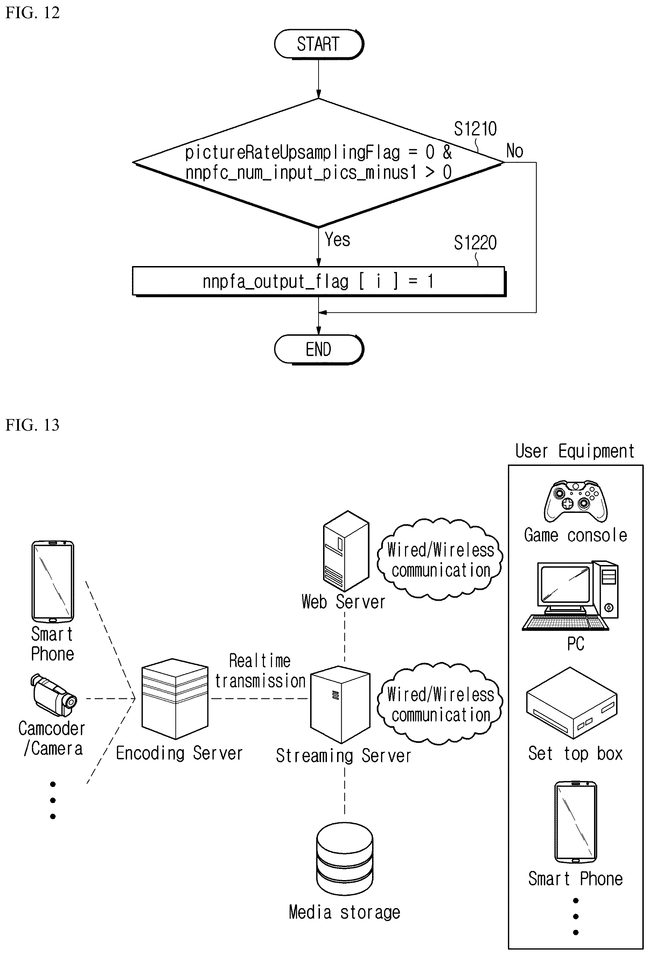

FIGS. 11 and 12 are flowcharts for explaining an example of an image encoding/decoding method according to Embodiment 4.

Referring to FIG. 11, the number of input pictures and the number of second information in the NNPFA SEI message may be determined (S1110). The number of input pictures may be determined by the nnpfc_num_input_pics_minus1 syntax element. The number of second information in the NNPFA SEI message may be determined by the nnpfa_num_output_entries syntax element.

When the number of input pictures is 1 (nnpfc_num_input_minus1 = 0) and the number of the second information in the NNPFA SEI message is 1 (nnpfa_num_output_entries=1), the value of the first (i = 0) second information (e.g., nnpfa_output_flag[ 0 ]) shall be equal to a first value (e.g., 1) indicating that the generated output picture is output (S1120). That is, the first output picture shall be output.

Referring to FIG. 12, whether the purpose of NNPF is picture rate upsampling and the number of input pictures may be determined (S1210). Here, whether the purpose of NNPF is picture rate upsampling may be determined based on the value of nnpfc_purpose & 0x08 or the value of pictureRateUpsamplingFlag. In addition, the number of input pictures may be determined by the nnpfc_num_input_pics_minus1 syntax element.

If the purpose of NNPF is not picture rate upsampling (pictureRateUpsamplingFlag = 0) and the number of input pictures is greater than 0 (nnpfc_num_input_pics_minus1 > 0), the value of the second information (e.g., nnpfa_output_flag[ i ]) shall be equal to a first value (e.g., 1) indicating that the generated output picture is output (S1220). Here, i may be at least one value in the range of 0 to NumInpPicsInOutputTensor - 1.

FIG. 13 is a view showing a content streaming system, to which an embodiment of the present disclosure is applicable.

As shown in FIG. 13, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

## INDUSTRIAL APPLICABILITY

The embodiments of the present disclosure may be used to encode or decode an image.

## Claims

1. An image decoding method performed by an image decoding apparatus, the image decoding method comprising:

   obtaining, from an NNPFC (neural-network post-filter characteristics) SEI (supplemental enhancement information) message, first information specifying whether at least one output picture corresponding to at least one input picture is generated; and
   obtaining, from an NNPFA (neural-network post-filter activation) SEI message, second information specifying whether the generated output picture is output,
   wherein a value of the second information is determined based on at least one of whether a purpose of an NNPF (neural-network post-filter) is picture rate upsampling or whether a number of input pictures is multiple.

2. The image decoding method of claim 1, wherein the value of the second information is determined to be a first value specifying that the generated output picture is output based on the purpose of the NNPF being not picture rate upsampling.

3. The image decoding method of claim 2, wherein the value of the second information is determined to be the first value further based on a number of pictures existing in an output tensor while having a corresponding input picture being equal to a number of second information in the NNPFA SEI message.

4. The image decoding method of claim 2, wherein the value of the second information is determined to be the first value further based on the number of input pictures being multiple.

5. The image decoding method of claim 1, wherein the value of the second information is determined to be a first value specifying that the generated output picture is output based on the number of input picture being one and a number of second information in the NNPFA SEI message being one.

6. The image decoding method of claim 1, wherein the second information is not obtained from the NNPFA SEI message based on the number of input pictures being one.

7. An image encoding method performed by an image encoding apparatus, the image encoding method comprising:

   encoding, from an NNPFC (neural-network post-filter characteristics) SEI (supplemental enhancement information) message, first information specifying whether at least one output picture corresponding to at least one input picture is generated; and

encoding, from an NNPFA (neural-network post-filter activation) SEI message, second information specifying whether the generated output picture is output,

wherein a value of the second information is determined based on at least one of whether a purpose of an NNPF (neural-network post-filter) is picture rate upsampling or whether a number of input pictures is multiple.

8. A computer-readable recording medium storing a bitstream generated by the image encoding method of claim 7.

9. A method of transmitting a bitstream generated by an image encoding method, the image encoding method comprising:

encoding, from an NNPFC (neural-network post-filter characteristics) SEI (supplemental enhancement information) message, first information specifying whether at least one output picture corresponding to at least one input picture is generated; and

encoding, from an NNPFA (neural-network post-filter activation) SEI message, second information specifying whether the generated output picture is output,

wherein a value of the second information is determined based on at least one of whether a purpose of an NNPF (neural-network post-filter) is picture rate upsampling or whether a number of input pictures is multiple.

FIG. 1

FIG. 2

FIG. 3

IMAGE DECODING APPARATUS 200

- ENTROPY DECODER 210
- DEQUANTIZER 220
- INVERSE TRANSFORMER 230
- 235 (+)
- FILTER 240
- MEMORY 250 / DPB
- INTRA PREDICTOR 265
- INTER PREDICTOR 260

BITSTREAM → RECONSTRUCTED IMAGE

FIG. 4

FIG. 5

START

ENCODE FIRST INFORMATION SPECIFYING WHETHER OUTPUT PICTURE CORRESPONDING TO INPUT PICTURE IS GENERATED — S510

ENCODE SECOND INFORMATION SPECIFYING WHETHER THE GENERATED OUTPUT PICTURE IS OUTPUT — S520

END

FIG. 6

```
                    ┌─────────┐
                    │  START  │
                    └─────────┘
                         │
                         ▼                            S610
┌────────────────────────────────────────────────┐
│       OBTAIN FIRST INFORMATION SPECIFYING        │
│    WHETHER OUTPUT PICTURE CORRESPONDING           │
│       TO INPUT PICTURE IS GENERATED              │
└────────────────────────────────────────────────┘
                         │
                         ▼                            S620
┌────────────────────────────────────────────────┐
│      OBTAIN SECOND INFORMATION SPECIFYING        │
│  WHETHER GENERATED OUTPUT PICTURE IS OUTPUT      │
└────────────────────────────────────────────────┘
                         │
                         ▼                            S630
┌────────────────────────────────────────────────┐
│    DETERMINE VALUE OF SECOND INFORMATION          │
│ BASED ON AT LEAST ONE OF WHETHER PURPOSE OF       │
│  NNPF IS PICTURE RATE UPSAMPLING OR WHETHER       │
│   THE NUMBER OF INPUT PICTURES IS MULTIPLE        │
└────────────────────────────────────────────────┘
                         │
                         ▼
                    ┌─────────┐
                    │   END   │
                    └─────────┘
```

FIG. 7

```
                    ┌─────────┐
                    │  START  │
                    └─────────┘
                         │
                         ▼
                        ╱ ╲                         S710
                      ╱     ╲
                    ╱  pictureRateUpsamplingFlag = 0 ╲     No
                  ╱  & nnpfa_num_output_entries  =    ╲───────┐
                    ╲     NumInpPicsInOutputTensor   ╱         │
                      ╲                            ╱           │
                        ╲                        ╱             │
                          ╲         │ Yes      ╱               │
                                    ▼             S720         │
              ┌────────────────────────────────────┐          │
              │      nnpfa_output_flag [ i ] = 1    │          │
              └────────────────────────────────────┘          │
                                    │                          │
                                    ▼◄─────────────────────────┘
                               ┌─────────┐
                               │   END   │
                               └─────────┘
```

FIG. 8

```
        START

   S810
pictureRateUpsamplingFlag = 0   No

   Yes        S820

nnpfa_output_flag [ i ] = 1

        END
```

FIG. 9

```
        START

   S910
nnpfc_num_input_pics_minus1 = 0   No

   Yes        S920

nnpfa_num_output_entries = 0

        END
```

FIG. 10

```
                    ┌──────────┐
                    │  START   │
                    └────┬─────┘
                         │
                         ▼
              ╱──────────────────────╲      S1010
            ╱  pictureRateUpsamplingFlag = 0 &  ╲   No
           ⟨   nnpfc_num_input_pics_minus1 > 0   ⟩────┐
            ╲                          ╱              │
              ╲──────────┬───────────╱               │
                         │ Yes           S1020        │
                         ▼                            │
            ┌────────────────────────────┐           │
            │  nnpfa_output_flag [ i ] = 1 │          │
            └────────────┬───────────────┘           │
                         │◄──────────────────────────┘
                         ▼
                    ┌──────────┐
                    │   END    │
                    └──────────┘
```

FIG. 11

```
                    ┌──────────┐
                    │  START   │
                    └────┬─────┘
                         │
                         ▼
              ╱──────────────────────╲      S1110
            ╱  nnpfc_num_input_pics_minus1 = 0 &  ╲   No
           ⟨   nnpfa_num_output_entries = 1        ⟩────┐
            ╲                          ╱                │
              ╲──────────┬───────────╱                 │
                         │ Yes           S1120          │
                         ▼                              │
            ┌────────────────────────────┐             │
            │  nnpfa_output_flag[ 0 ] = 1  │            │
            └────────────┬───────────────┘             │
                         │◄────────────────────────────┘
                         ▼
                    ┌──────────┐
                    │   END    │
                    └──────────┘
```

FIG. 12

START

pictureRateUpsamplingFlag = 0 &
nnpfc_num_input_pics_minus1 > 0    S1210    No

Yes    S1220

nnpfa_output_flag [ i ] = 1

END

FIG. 13

User Equipment

Game console

PC

Set top box

Smart Phone

Web Server

Wired/Wireless
communication

Smart
Phone

Camcoder
/Camera

Encoding Server

Realtime
transmission

Streaming Server

Wired/Wireless
communication

Media storage

## INTERNATIONAL SEARCH REPORT

| International application No. |
|---|
| **PCT/KR2024/008860** |

**A. CLASSIFICATION OF SUBJECT MATTER**

**H04N 19/85**(2014.01)i; **H04N 19/132**(2014.01)i; **H04N 19/70**(2014.01)i; **H04N 19/117**(2014.01)i; **G06N 3/02**(2006.01)i

According to International Patent Classification (IPC) or to both national classification and IPC

**B. FIELDS SEARCHED**

Minimum documentation searched (classification system followed by classification symbols)

H04N 19/85(2014.01); H04N 19/117(2014.01); H04N 19/186(2014.01); H04N 19/80(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 신경망(neural-network), 후-필터(post-filter), SEI(supplemental enhancement information), 메시지(message), 출력(output)

**C. DOCUMENTS CONSIDERED TO BE RELEVANT**

| Category* | Citation of document, with indication, where appropriate, of the relevant passages | Relevant to claim No. |
|---|---|---|
| Y | US 2023-0112309 A1 (NOKIA TECHNOLOGIES OY) 13 April 2023 (2023-04-13) <br> See paragraphs [0019], [0235], [0241], [0259], [0263]-[0264] and [0329]; claim 8; and figures 5 and 7. | 1-9 |
| Y | OHM, Jens-Rainer. Meeting Report of the 30th Meeting of the Joint Video Experts Team (JVET), by teleconference. 21–28 April 2023. JVET-AD1000-v1, Joint Video Experts Team (JVET) of ITU-T SG 16 WP 3 and ISO/IEC JTC 1/SC 29, 30th Meeting. Antalya, TR. pp. 1-326, 26 May 2023. <br> See pages 225, 233, 237 and 239. | 1-9 |
| A | WO 2023-056348 A1 (INNOPEAK TECHNOLOGY, INC.) 06 April 2023 (2023-04-06) <br> See claims 1-8. | 1-9 |
| A | US 2022-0385896 A1 (TENCENT AMERICA LLC) 01 December 2022 (2022-12-01) <br> See claims 1-9. | 1-9 |
| A | US 2022-0021905 A1 (GUANGDONG OPPO MOBILE TELECOMMUNICATIONS CORP., LTD.) 20 January 2022 (2022-01-20) <br> See claims 8-13. | 1-9 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **23 September 2024** | **04 October 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/008860**

| Patent document cited in search report | | | Publication date (day/month/year) | Patent family member(s) | | | Publication date (day/month/year) |
|---|---|---|---|---|---|---|---|
| US | 2023-0112309 | A1 | 13 April 2023 | EP | 4161072 | A1 | 05 April 2023 |
| WO | 2023-056348 | A1 | 06 April 2023 | CN | 117981323 | A | 03 May 2024 |
| | | | | EP | 4409911 | A1 | 07 August 2024 |
| | | | | KR | 10-2024-0089011 | A | 20 June 2024 |
| US | 2022-0385896 | A1 | 01 December 2022 | CN | 115956363 | A | 11 April 2023 |
| | | | | EP | 4128764 | A1 | 08 February 2023 |
| | | | | JP | 2023-532397 | A | 28 July 2023 |
| | | | | KR | 10-2023-0010259 | A | 18 January 2023 |
| | | | | US | 11979565 | B2 | 07 May 2024 |
| | | | | WO | 2022-251828 | A1 | 01 December 2022 |
| US | 2022-0021905 | A1 | 20 January 2022 | CN | 113574884 | A | 29 October 2021 |
| | | | | EP | 3941057 | A1 | 19 January 2022 |
| | | | | JP | 2022-526107 | A | 23 May 2022 |
| | | | | KR | 10-2021-0139342 | A | 22 November 2021 |
| | | | | WO | 2020-192020 | A1 | 01 October 2020 |

Form PCT/ISA/210 (patent family annex) (July 2022)